# EUROPÄISCHE PATENTSCHRIFT

(11) **EP 3 237 892 B1**
(45) Veröffentlichungstag und Bekanntmachung des Hinweises auf die Patenterteilung: **24.05.2023**
(21) Anmeldenummer: 15777943.0
(22) Anmeldetag: 09.10.2015
(51) Int. Cl.: G01N 21/90, B65G 47/84, B65G 47/32, B65G 47/244, B65G 54/02

(54) **VORRICHTUNG UND VERFAHREN ZUR FORTLAUFENDEN INSPEKTION VON BEHÄLTERN**
DEVICE AND METHOD FOR CONTINUOUSLY INSPECTING CONTAINERS
DISPOSITIF ET PROCÉDÉ D'INSPECTION EN CONTINU DE RÉCIPIENTS

(30) Priorität: 23.12.2014 DE 102014226965
(43) Veröffentlichungstag der Anmeldung: 01.11.2017
(73) Patentinhaber: Krones Aktiengesellschaft, 93073 Neutraubling (DE)
(72) Erfinder: PIANA, Stefan, 93073 Neutraubling (DE); RICHTER, Stefan, 93073 Neutraubling (DE)
(74) Vertreter: Grünecker Patent- und Rechtsanwälte PartG mbB
(86) Internationale Anmeldenummer: PCT/EP2015/073351
(87) Internationale Veröffentlichungsnummer: WO 2016/102092

(56) Entgegenhaltungen:
- EP-A1- 2 511 203
- WO-A2-2008/022296
- GB-A- 2 325 204
- JP-A- S62 285 817
- US-A- 3 797 632

## Beschreibung

### Gebiet der Erfindung

Die vorliegende Erfindung betrifft eine Vorrichtung und ein Verfahren zum fortlaufenden Inspizieren von Behältern, insbesondere von Flaschen, beispielsweise zur Leergutinspektion in der Getränkeindustrie.

### Stand der Technik

Inspektionsmaschinen werden beispielsweise in der Getränkeindustrie zum Prüfen von Leergut, beispielsweise von Glas- oder Kunststoffflaschen, auf Beschädigungen, Verschmutzungen oder Restflüssigkeiten eingesetzt, bevor die geprüften Behälter erneut in den Produktkreislauf eingebracht werden. Dabei müssen die zu inspizierenden Behälter zumindest zeitweise so geführt werden, dass Boden- und Mündungsbereich gleichzeitig frei zugänglich sind. Dadurch wird eine Durchlichtinspektion in Richtung der Behälterhauptachse ermöglicht, wobei z. B. der Behälterboden in Hinblick auf Beschädigungen inspiziert oder per Infrarot eine in dem Behälter enthaltene Restflüssigkeit detektiert werden kann. Die Inspektion erfolgt dabei im Allgemeinen vollautomatisch mit Hilfe entsprechender optischer System, beispielsweise unter Verwendung einer Kamera und einer LED-Blitzlampe, und geeigneter Auswertungssoftware, welche aus den Mess- bzw. Bilddaten Rückschlüsse auf die genannten Beschädigungen bzw. Verunreinigungen zieht. Beschädigte bzw. verschmutzte Behälter können dann automatisch ausgeschleust und der weiteren Verarbeitung bzw. Reinigung zugeführt werden.

Im Stand der Technik bekannte lineare Inspektionsmaschinen weisen eine Durchlaufstation auf, innerhalb derer die Behälter durch beidseitigen Druck über beidseitig angeordnete Transportriemen linear transportiert werden. Da die Behälter in der Durchlaufstation seitlich gehalten werden, sind somit Boden- und Mündungsbereich der Behälter gleichzeitig frei zugänglich. Eine Inspektionsmaschine mit Transportriemen im Bereich der Durchlaufstation ist beispielsweise aus der EP 0 415 154 B1 bekannt. Dabei weisen die Transportriemen keine definierten Positionen zum Halten der Behälter auf, sondern können an beliebigen Positionen Behälter aufnehmen. Mehrere Behälter, die sich gleichzeitig in der Durchlaufstation befinden, werden dabei synchron von den Transportriemen transportiert. Typischerweise werden rotationssymmetrische Behälter, wie z. B. Flaschen, entlang der Transstrecke der Durchlaufstation um 90° um ihre Behälterachse gedreht, damit Seitenwandinspektoren im Einlauf und im Auslauf der Inspektionsmaschine jeweils unterschiedliche Bereiche der Mantelfläche der Behälter inspizieren können. Bei den im Stand der Technik bekannten Inspektionsmaschinen mit Riementransport in der Durchlaufstation müssen die Behälter im Behältereinlauf drucklos, d. h. ohne Kontakt miteinander, zugeführt werden. Dies macht eine aufwändige und platzraubende Vorrichtung zum Druckabbau, d. h. räumlichen Trennen der im Allgemeinen Stoß an Stoß transportierten Behälter, im einlaufenden Behälterstrom erforderlich, beispielsweise durch Vorsehen von Überschüben, Eckeinteilsternen oder Einteilschnecken. Die häufig verwendeten Überschübe können dabei keinen definierten Mindestabstand definieren, sodass Segmentausleitungen nicht eingesetzt werden können. Außerdem führt die Behälterdrehung während des Transports mittels Transportriemen häufig zu einem Verkippen der Behälter um wenige Grad in Laufrichtung, insbesondere wenn der Haltebereich von der idealen Zylinderform abweicht. Hierdurch kann die Effizienz von Inspektionen, z. B. für den Behälterboden oder für Schraubgewinde, beeinträchtigt werden und die auslaufseitige Behälterführung bei höheren Behälterdurchsätzen der Inspektionsmaschine erschwert werden. Die GB2325204 A offenbart eine Vorrichtung zur Glasbehälterinspektion. Die EP2511203 A1 offenbart ein Verfahren und eine Vorrichtung zum Transportieren von Behältnissen oder Behältnisgebinden.

Der vorliegenden Erfindung liegt somit die Aufgabe zugrunde, eine Vorrichtung und ein Verfahren zum fortlaufenden Inspizieren von Behältern zu Verfügung zu stellen, welches die oben genannten Nachteile umgeht. Insbesondere sollen die Zufuhr bzw. Abfuhr der Behälter zur bzw. von der Inspektionsmaschine vereinfacht werden. Außerdem soll die Stabilität des Transports der Behälter in der Durchlaufstation erhöht werden, um die Effizienz der Inspektionseinrichtungen zu verbessern. Zusätzlich liegt der Erfindung die Aufgabe zugrunde, einen Sortenwechsel der Behälter bei der verwendeten Inspektionsmaschine zu erleichtern.

### Beschreibung der Erfindung

Die oben genannten Aufgaben werden gelöst durch eine Inspektionsvorrichtung zum fortlaufenden Inspizieren von zugeführten Behältern, insbesondere von Flaschen, nach Anspruch 1 sowie ein entsprechendes Verfahren nach Anspruch 11. Die Inspektionsvorrichtung umfasst: eine Zufuhrfördereinrichtung, die dazu ausgebildet ist, der Inspektionsvorrichtung aufeinanderfolgend Behälter zuzuführen, wenigstens eine Inspektionseinrichtung, die dazu ausgebildet ist, die zugeführten Behälter zu inspizieren, eine Abfuhrfördereinrichtung, die dazu ausgebildet ist, die inspizierten Behälter abzuführen, und eine zwischen der Zufuhrfördereinrichtung und der Abfuhrfördereinrichtung angeordnete Durchlaufstation für die Behälter, wobei die Durchlaufstation eine Transporteinrichtung mit einem Individualantrieb und einer Vielzahl von mittels des Individualantriebs einzeln und unabhängig voneinander bewegbaren Fördermitteln aufweist, die dazu ausgebildet ist, die Behälter von der Zufuhrfördereinrichtung zu der Abfuhrfördereinrichtung zu befördern.

Bei den Behältern kann es sich um Dosen, Glasflaschen oder andere Glasbehälter mit Deckel, Kunststoffflaschen, beispielsweise aus PET, oder ähnliches handeln. Insbesondere transparente Behälter wie Glasflaschen oder Kunststoffflaschen aus PET lassen sich mit der Inspektionsvorrichtung in vorteilhafter Weise inspizieren, da bei durchsichtigen Gegenständen nicht nur die dem jeweiligen Sensor bzw. der jeweiligen Kamera zugewandte Seite, sondern auch die gegenüberliegende Seite des Behälters erfasst und geprüft werden kann. Mit den weiter unten beschriebenen Seitenwandinspektoren lässt sich durch Drehen des Behälters in der Durchlaufstation somit die gesamte Mantelfläche des Behälters inspizieren.

Erfindungsgemäß umfasst die Inspektionsvorrichtung eine Zufuhrfördereinrichtung zum aufeinanderfolgenden Zuführen der Behälter, eine Abfuhrfördereinrichtung zum Abführen der inspizierten Behälter und eine zwischen der Zufuhrfördereinrichtung und der Abfuhrfördereinrichtung angeordnete Durchlaufstation für die Behälter. Zur fortlaufenden Inspektion der Behälter wird dabei der Inspektionsvorrichtung ein Behälterstrom über die Zufuhrfördereinrichtung zugefördert, dessen Behälter dann mittels der unten beschriebenen Transporteinrichtung entlang einer die Zufuhrfördereinrichtung mit der Abfuhrfördereinrichtung verbindenden Transportstrecke transportiert werden, um anschließend von der Abfuhrfördereinrichtung abgefördert zu werden. Dabei findet der Transport der Behälter innerhalb der Durchlaufstation derart statt, dass Boden- und Mündungs- bzw. Kopfbereich der transportierten Behälter gleichzeitig frei zugänglich sind. Die Zufuhrfördereinrichtung und / oder die Abfuhrfördereinrichtung können beispielsweise als Transportbänder ausgebildet sein, welche die Behälter unter Druck, also Stoß an Stoß fördern. Alternativ können auch andere Transportsystem zum Einsatz kommen, inklusive der unten beschriebenen Linearmotorantriebe, aber auch Riementransport oder Einlauf- bzw. Auslaufsterne sind denkbar. Die genannten Systeme sind im Stand der Technik hinreichend bekannt und werden daher hier nicht detailliert erläutert. Es soll lediglich erwähnt werden, dass die erwähnte Transporteinrichtung der Durchlaufstation die zugeführten Behälter von der Zufuhrfördereinrichtung übernimmt und nach Transport durch die Durchlaufstation an die Abfuhrfördereinrichtung übergibt. Dazu können die von der Zufuhrfördereinrichtung beispielsweise stehend transportierten Behälter von einem Transportband abgenommen und angehoben werden, sodass deren Bodenfläche zur Inspektion zugänglich wird. Die Transporteinrichtung kann die inspizierten Behälter anschließend auf ein Transportband der Abfuhrfördereinrichtung abstellen.

Erfindungsgemäß umfasst die Inspektionsvorrichtung wenigstens eine Inspektionseinrichtung zum Inspizieren der zugeführten Behälter. Dabei kann die wenigstens eine Inspektionseinrichtung im Bereich der Durchlaufstation an der Transportstrecke der Transporteinrichtung, an der Zufuhrfördereinrichtung oder auch an der Abfuhrfördereinrichtung angeordnet sein. Im Bereich der Durchlaufstation kann beispielsweise eine Inspektionseinrichtung zur Dichtflächeninspektion vorgesehen sein, welche eine Mündung der Behälter mittels einer Beleuchtungseinheit und einer Kamera, beispielsweise einer CCD-Kamera, auf Beschädigungen kontrolliert. Alternativ oder zusätzlich kann eine Inspektionseinrichtung zur Restflüssigkeitskontrolle, beispielsweise mittels Hochfrequenz und / oder Infrarot vorgesehen sein. Wie erwähnt kann insbesondere eine Inspektionseinrichtung zur Inspektion des Behälterbodens vorgesehen sein, bei welcher eine Kamera ein Bild des Behälterbodens aufnimmt, der durch eine LED-Blitzlampe ausgeleuchtet wird. Auch eine Inspektionseinrichtung zur Innenseitenwand-Inspektion ist denkbar, bei welcher mit einer CCD-Kamera das Innere des Behälters durch die Behältermündung inspiziert wird. Weitere Beispiele sind Inspektionseinrichtungen zur Gewindeinspektion oder Seitenmündungsinspektion, die den Mündungsbereich der Behälter kontrollieren. Es versteht sich, dass die genannten Inspektionseinrichtungen durch andere, im Stand der Technik bekannte Inspektionseinrichtungen für Behälter ergänzt oder ersetzt werden können.

An der Zufuhrfödereinrichtung und / oder der Abfuhrfördereinrichtung können zudem die unten genauer beschriebenen Inspektionseinrichtungen zur Seitenwand-Inspektion vorgesehen werden. Des Weiteren kann an der Zufuhrfördereinrichtung eine Inspektionseinrichtung zur Fremdbehältererkennung vorgesehen werden, mittels derer sich Fremdbehälter vor dem Einlauf in die Durchlaufstation erkennen und ausschleusen lassen. Die beschriebenen Inspektionseinrichtungen führen die jeweiligen Inspektionsschritte dabei zumindest teilautomatisch durch, indem jeder Behälter des fortlaufenden Behälterstroms in dem jeweiligen Behälterbereich sensorisch oder optisch erfasst wird. Die erfassten Sensor- oder Bilddaten können zudem vollautomatisch verarbeitet werden, wobei erkannte defekte Behälter im Nachlauf zur Inspektionsvorrichtung ausgeschleust werden können.

Erfindungsgemäß werden die Behälter entlang der Transportstrecke der Transporteinrichtung der Durchlaufstation mit einem Individualantrieb und einer Vielzahl von mittels des Individualantriebs einzeln und unabhängig voneinander bewegbaren Fördermitteln transportiert. Unter einem Individualantrieb ist hier und im Folgenden ein Antrieb zu verstehen, welcher die Vielzahl der Fördermittel individuell antreibt. Dabei kann der Antrieb als Teil des jeweiligen Fördermittels und / oder als separater Antrieb vorgesehen sein, der derart ausgebildet ist, dass die Fördermittel einzeln und unabhängig voneinander bewegbar sind. Dieses unabhängige Bewegen bezieht sich dabei sowohl auf die Position als auch auf die Geschwindigkeit des Fördermittels. Die Transporteinrichtung verfügt über eine Vielzahl von einzeln bewegbaren Fördermitteln. Dabei sind die Fördermittel so ausgebildet, dass sie einen oder mehrere Behälter mit einem individuellen Weg-Zeit-Profil entlang der Transportstrecke transportieren können. Insbesondere können die Fördermittel als Schlitten oder Läufer ausgebildet werden, welche jeweils Haltevorrichtungen zum Transport der Behälter aufweisen. Bei dem Individualantrieb kann es sich insbesondere um den nachfolgend genauer beschriebenen Linearmotorantrieb handeln, bei welchem die Fördermittel durch magnetische Wechselwirkung mit einem oder mehreren Linearstatoren einzeln und unabhängig voneinander bewegt werden. Zur Definition der jeweiligen Weg-Zeit-Profile der Fördermittel, und damit der transportierten Behälter, kann die erfindungsgemäße Inspektionsvorrichtung eine Steuer- und / oder Regeleinrichtung als Teil der Transporteinrichtung umfassen, welche die Fördermittel und / oder den Individualantrieb entsprechend ansteuert. Die Anzahl der Fördermittel kann gemäß dem gewünschten Durchsatz an Behältern der Inspektionsvorrichtung sowie in Abhängigkeit von einer Länge der Transportstrecke sowie der unten erwähnten Transportbahnen gewählt werden. Im Allgemeinen werden wenigstens so viele Fördermittel vorgesehen, dass die erforderlichen Inspektionsschritte an den eventuell mehr als einer Inspektionseinrichtung bevorzugt an mehreren Behältern parallel durchgeführt werden können und keine Lücken in der fortlaufenden Inspektion entstehen.

Erfindungsgemäß wird die Transporteinrichtung eine erste Transportbahn aufweisen, an der eine erste Vielzahl von Fördermitteln bewegbar angeordnet ist, und eine zweite Transportbahn aufweisen, an der eine zweite Vielzahl von Fördermitteln bewegbar angeordnet ist, wobei die erste Transportbahn und die zweite Transportbahn derart zueinander und zu der Zufuhrfördereinrichtung und der Abfuhrfördereinrichtung angeordnet sind, dass im Bereich der Durchlaufstation Paare von gegenüberliegend angreifenden Fördermitteln für die Behälter jeweils aus einem Fördermittel der ersten Vielzahl von Fördermitteln und einem Fördermittel der zweiten Vielzahl von Fördermitteln gebildet werden können.

Die erste und die zweite Transportbahn können sich hierbei über den Bereich der Transportstrecke im Bereich der Durchlaufstation hinaus erstrecken. Die Form der ersten bzw. zweiten Transportbahn ist grundsätzlich beliebig, solange ein Teil der beiden Transportbahnen derart zwischen der Zufuhrfördereinrichtung und der Abfuhrfördereinrichtung angeordnet ist, dass Behälter von der Zufuhrfördereinrichtung durch die Durchlaufstation zur Abfuhrfördereinrichtung transportiert werden können. Insbesondere können die Transportbahnen im Wesentlichen geschlossen sein, wobei im Wesentlichen geschlossen bedeutet, dass die jeweilige Transportbahn mindestens einen geschlossenen Weg für die jeweilige Vielzahl von Fördermitteln aufweist. Dies kann beispielsweise durch Bereitstellen einer Rückführstrecke als Teil der Transportbahn realisiert werden, wobei die Rückführstrecke ein Rückführen der Fördermittel zur Zufuhrfördereinrichtung nach Abgabe der Behälter an die Abfuhrfördereinrichtung ermöglicht. Jede Transportbahn kann jedoch auch zumindest teilweise offen ausgestaltet sein, in der Art, dass wenigstens eine Teilstrecke der Transportbahn als Sackgasse zum Puffern von Fördermitteln ausgeführt ist. Darüberhinaus muss nicht die gesamte jeweilige Transportbahn mit dem beschriebenen Individualantrieb für die Fördermittel ausgestattet sein. Alternativ können der Teil der Transportbahn außerhalb der Durchlaufstation und insbesondere die Rückführstrecke mit einem kontinuierlichen Antrieb wie einem Transportriemen oder ähnlichem ausgestattet sein. Die Anzahl der an der jeweiligen Transportbahn bewegbar angeordneten Fördermittel richtet sich nach der Anzahl der gleichzeitig zu transportierenden Behältern, d. h. nach einem vorbestimmten Durchsatz an Behältern pro Zeitintervall für die Inspektionsvorrichtung. Dabei kann die Zahl der an der ersten Transportbahn angeordneten Fördermittel insbesondere gleich der Zahl der an der zweiten Transportbahn angeordneten Fördermittel sein, oder bei Bedarf von ihr verschieden sein.

Gemäß der Erfindung sind die erste und die zweite Transportbahn derart zueinander und zu der Zufuhrfördereinrichtung und der Abfuhrfördereinrichtung angeordnet, dass im Bereich der Durchlaufstation Paare von gegenüberliegend angreifenden Fördermitteln für die Behälter jeweils aus einem Fördermittel der ersten Vielzahl von Fördermitteln und einem Fördermittel der zweiten Vielzahl von Fördermitteln gebildet werden können. Insbesondere sind die erste und die zweite Transportbahn derart angeordnet, dass die Paare von Fördermitteln am Anfang der Transportstrecke der Durchlaufstation zur Aufnahme der Behälter von der Zufuhrfördereinrichtung gebildet werden, entlang der gesamten Transportstrecke erhalten bleiben und erst am Ende der Transportstrecke zur Abgabe der Behälter an die Abfuhrfördereinrichtung wieder aufgelöst werden. Das Bilden und Auflösen der Paare erfolgt dabei durch Annähern bzw. Divergieren der beiden Transportbahnen an den jeweiligen Stellen.

Dabei ist hier und im Folgenden unter dem Bilden eines Paares von Fördermitteln zu verstehen, dass die beiden das Paar bildenden Fördermittel mittels des Individualantriebs und einer Steuer- und/oder Regeleinrichtung derart entlang der jeweiligen Transportbahn positioniert und bewegt werden, dass sich durch die räumliche Stellung der Fördermittel zueinander und zu der Transportstrecke eine Paarung ergibt. Insbesondere ist zur Bildung der Paare im Allgemeinen keine mechanische Kopplung der gegenüberliegend angreifenden Fördermittel erforderlich. Hierbei sind unter gegenüberliegend angreifenden Fördermitteln solche Fördermittel zu verstehen, die derart ausgebildet und ausgerichtet sind, dass die Behälter zwischen gegenüberliegenden Fördermitteln und mittels mechanischen Kontakts mit diesen derart transportiert werden können, dass sowohl der Boden- als auch der Mündungsbereich der Behälter während des Transports frei zugänglich sind. Die Fördermittel greifen dazu während des Transports an einem im Wesentlichen zylindrischen Teil der Behälters an, wobei im Wesentlichen zylindrisch bedeutet, dass sich der Querschnitt des Behälters im Bereich des mechanischen Kontakts mit den Fördermitteln nur so wenig ändert, dass die Inspektion des Behälters, z. B. des Behälterbodens, nicht durch die angreifenden Fördermittel behindert wird. Dabei sind die Fördermittel derart steuerbar, dass aufeinanderfolgende Behälter mit einem vorgegebenen Trennungsabstand in Förderrichtung entlang einer Transportstrecke der Transporteinrichtung transportiert werden können.

Insbesondere können die gegenüberliegend angreifenden Fördermittel eines jeden Paares mittels einer Steuer- und / oder Regeleinrichtung der Transporteinrichtung derart gleichzeitig entlang der Transportstrecke der Durchlaufstation bewegt werden, dass ein sich zwischen einem Paar von gegenüberliegend angreifenden Fördermitteln befindender Behälter durch die gleichzeitige Bewegung der Fördermittel mitgeführt wird. Eine gleichzeitige Bewegung der Fördermittel kann hierbei durch eine beliebige der weiter unten beschriebenen Ausführungsformen der Fördermittel und ihrer Antriebssysteme realisiert werden. Des Weiteren kann die Transportstrecke je nach Ausbildung und Art der Übergabe von Behältern an bzw. von den Zufuhr- bzw. Abfuhrfördereinrichtungen geradlinig oder auch zumindest teilweise gekrümmt sein.

Der Transport von Behältern entlang der Transportstrecke der Durchlaufstation durch gleichzeitiges Bewegen von Paaren gegenüberliegend angreifender Fördermittel erlaubt ein sicheres Halten und Führen des jeweiligen Behälters, insbesondere auch ohne dass der Behälter auf einer Förderfläche steht, welches bei geeigneter Ausbildung der Fördermittel (siehe unten) für eine Vielzahl von unterschiedlichen Behältern, insbesondere mit unterschiedlichen Querschnittsflächen und -durchmessern, ohne Umrüsten der Fördermittel oder Austausch von Formatteilen möglich wird.

Die erste Transportbahn und die zweite Transportbahn können insbesondere entlang der Transportstrecke der Durchlaufstation parallel angeordnet sein. Eine solche parallele Anordnung ist auch für Kurvenstücke der Transportstrecke möglich, indem die erste und die zweite Transportbahn mit konstantem Abstand voneinander angeordnet werden. Der Abstand der ersten von der zweiten Transportbahn kann hierbei ausgehend von der Ausbildung der Fördermittel und dem maximalen Durchmesser sowie der Querschnittsform der zu transportierenden Behälter vorgegeben werden. Eine parallele Anordnung der ersten und der zweiten Transportbahn entlang der Transportstrecke garantiert dabei, dass der mitgeführte Behälter während des gesamten Transports entlang der Transportstrecke mit einer konstanten seitlichen Kraft von den gegenüberliegend angreifenden Fördermitteln gehalten wird.

Erfindungsgemäß weisen die Fördermittel Haltevorrichtungen auf, wobei gegenüberliegend angreifende Fördermittel eines Paares im Bereich der Durchlaufstation derart zueinander ausgerichtet sind, dass mindestens ein Behälter zwischen Haltevorrichtungen gegenüberliegender Fördermittel form- oder kraftschlüssig gehalten und transportiert werden kann. Die Haltevorrichtungen können beispielsweise in Form von Klammern ausgestaltet sein, wobei die Klammern passiv oder aktiv steuerbar ausgebildet sein können. Insbesondere sind Klammern zum formschlüssigen oder kraftschlüssigen Einspannen eines im Wesentlichen zylindrischen Teils der Behälter zwischen Klammern gegenüberliegend angreifender Fördermittel vorstellbar, wobei der gehaltene Behälter beim formschlüssigen Einspannen zwischen den Klammern um seine Längsachse drehbar gelagert ist. Dies kann beispielsweise durch Vorsehen von drehbaren Rollen an den Klammern ermöglicht werden, wobei die Rollen aus einem Material mit ausreichend hoher Haftreibung bestehen können oder mit einem solchen beschichtet sein können, um ein Herausrutschen der transportierten Behälter zu vermeiden. Zudem können die Haltevorrichtungen höhenverstellbar ausgebildet sein, um auf einfache Weise einen Sortenwechsel auf Behälter mit einer anderen Höhe zu ermöglichen. Erfindungsgemäß sind die Haltevorrichtungen an den Fördermitteln eines Paares derart angeordnet, dass sie sich entlang der Transportstrecke der Durchlaufstation gegenüberstehen. Somit kann ein zu transportierender Behälter zwischen den Haltevorrichtungen eines solchen Paares eingespannt werden und durch gleichzeitiges Bewegen der Fördermittel des Paares entlang der Transportstrecke weiterbewegt werden.

Dabei ist ein kraftschlüssiges oder formschlüssiges Halten der Behälter durch die gegenüberliegend angreifenden Fördermitteln auch dann möglich, wenn die Inspektion des Behälters ein Neckhandling unmöglich macht, wie es beispielsweise bei der Innenseitenwand-Inspektion der Fall ist. Die vorliegende Weiterbildung erlaubt zudem die Übernahme einzelner Behälter aus einem Zufuhrstrom, in dem die Behälter unter Staudruck befördert werden, d. h. in dem sich die Behälter entlang der Förderrichtung an ihrem Umfang berühren. Bei Zufuhr von Behältern unter Staudruck können eventuelle Haltevorrichtungen im Allgemeinen nicht ohne weiteres zwischen die Behälter greifen, um ein form- oder kraftschlüssiges Halten zu ermöglichen. Bei gegenüberliegend angreifenden Fördermitteln ist ein solches Greifen zwischen die Behälter jedoch nicht zwingend erforderlich, um einen Behälter aus dem Behälterstrom zum Transport durch die Durchlaufstation auszusondern. Durch die seitlich angreifenden Haltevorrichtungen und die von ihnen ausgeübte seitliche Kraft reicht bereits eine geringe Kontaktfläche bezüglich des Gesamtumfangs des Behälters aus, um eine form- oder kraftschlüssige Halterung zu bilden.

So können die Klammern der Haltevorrichtungen beispielsweise derart ausgebildet sein, dass sie seitlich an den Behältern angreifen, wobei sich an den Enden der Klammern jeweils eine Stützrolle befinden kann, um den transportierten Behälter durch einen oder mehrere seitlich angreifende Friktionsriemen, die im Bereich der Durlaufstation angeordnet sind, gezielt drehen zu können. Die Haltevorrichtungen können weiterhin mit einem Scherenmechanismus der Klammern ausgebildet sein, welcher federnd ausgeführt sein kann, um Toleranzen der Behälterdurchmesser auszugleichen. Die Zustellung von relativ zum Fördermittel verfahrbaren Haltevorrichtungen zum Behälter kann in den oben genannten Weiterbildungen über eine Steuerkurve und/oder das Führen der Fördermittel entlang gekrümmter Transportbahnen erfolgen.

Der oder die Friktionsriemen können elektrisch angetrieben sein. Dabei kann der Antrieb des oder der Friktionsriemen über eine Steuer- und/oder Regeleinheit derart gesteuert werden, dass der Behälter dem Behälterdurchmesser entsprechend gedreht wird, um eine Drehung um einen Winkel zwischen 70° und 110°, bevorzugt um etwa 90°, zu bewerkstelligen. Die Drehung des Behälters kann dabei durch einen einseitig angreifenden Friktionsriemen oder zwei beidseitig angreifende Friktionsriemen erreicht werden. Wie zuvor erwähnt, können die Rollen der Klammern aus einem Material mit ausreichender Haftreibung gebildet bzw. mit einem solchen beschichtet sein, beispielsweise mit Gummi, um ein sicheres Halten der Behälter zu ermöglichen.

Eine weitere Ausführung zur Drehung des Behälters kann in der Art eines Ratschenmechanismus realisiert werden, wobei die an dem Behälter angreifenden Rollen zumindest auf einer Seite des Behälters mit Lagern ausgestattet sind, die in einer Drehrichtung sperren. Wird der Linearantrieb dann derart gesteuert, dass während der Vorwärtsbewegung der beiden an dem Behälter angreifenden Fördermittel das eine Fördermittel zeitweise schneller fährt, so dass die Klammern beispielsweise in Fahrtrichtung bis zu 10 mm Differenz haben, rollt sich der Behälter durch die relative Verschiebung der an ihn angreifenden Klammern um einen geringen Winkelbetrag ab. Wird im Folgenden die Geschwindigkeit des einen Fördermittels wieder verringert, sperrt ein Freilauf die Rückwärtsdrehung der Stützrollen, so dass der Behälter nun um den Winkelbetrag gedreht wird. Anschließend sind die Fördermittel wieder in der Ausgangsposition, sodass der Vorgang wiederholt werden kann, um den Behälter nach und nach zu drehen. Damit ist ein einer Ratsche ähnlicher Mechanismus zur gezielten Drehung der Behälter realisiert. Es versteht sich, dass die Sperrrichtung der Rollen auch so vorgesehen sein kann, dass der Behälter beim Auseinanderfahren der Fördermittel gedreht wird, während die Rollen beim erneuten Zusammenfahren der Fördermittel auf der Behälteroberfläche abrollen. Das relative Verfahren der Fördermittel kann dabei von einer Steuer- und/oder Regeleinheit der Transporteinrichtung gesteuert werden.

Gemäß einer speziellen Weiterbildung können die Haltevorrichtungen eine oder mehrere Y-förmige Klammern aufweisen, d. h. die Klammern umfassen ein von zwei Schenkeln gebildetes Winkelelement, welches mit einem Längselement verbunden ist. Dabei sind die Haltevorrichtungen derart an den Fördermitteln angeordnet, dass die Öffnung des Winkelelements des Ypsilons zu dem zu transportierenden Behälter hinweist. Jedes Fördermittel kann eine oder mehrere entlang der Längsachse der zu transportierenden Behälter übereinander angeordnete Klammern aufweisen, wobei eine größere Kontaktfläche mit dem zu transportierenden Behälter eine höhere Transportsicherheit aufgrund der höheren Reibung mit sich bringt. Die Anzahl der Klammern der Fördermittel der ersten Vielzahl von Fördermitteln kann sich von der Anzahl der Klammern der Fördermittel der zweiten Vielzahl unterscheiden. Insbesondere ist ein kammartiges Ineinandergreifen der Klammern gegenüberliegender Fördermittel, jedoch ohne direkten mechanischen Kontakt, denkbar, um eine möglichst stabile Halterung zu erzielen, welche ein Verkippen der beförderten Behälter vermeidet. Die Größe und die Form der Y-förmigen Klammern kann dabei je nach Querschnittsform und -größe der zu transportierenden Behälter vorgegeben werden. Die Verwendung von Y-förmigen Klammern hat dabei den Vorteil, dass eine Vielzahl von Querschnittsradien aufgrund der Y-Form zwischen zwei gegenüberliegend angreifenden Klammern eingespannt werden können. Somit gestattet die erfindungsgemäße Inspektionsvorrichtung einen Produktwechsel zwischen Behältern unterschiedlicher Querschnitte, ohne Formatteile für den Transport in der Durchlaufstation auszutauschen. Dadurch lassen sich eventuelle Rüstzeiten erheblich verkürzen.

Gemäß einer speziellen Weiterbildung kann der Winkel zwischen den Y-Schenkeln der Klammern, d. h. der Winkel der Winkelelemente,, insbesondere durch Ausbilden zumindest der Schenkel aus einem dauerelastischen Material oder als winkelverstellbare Schenkel mit einem zwischen den Schenkeln angeordneten federelastischen Element, veränderbar sein, und/oder die Haltevorrichtungen können längen- und/oder winkelverstellbar an den Fördermitteln angeordnet sein. Unter einem dauerelastischen Material ist hier und im Folgenden ein Material zu verstehen, welches reversibel verformbar ist und mittels einer Rückstellkraft der Verformung entgegen wirkt. Beispielsweise können die Y-Schenkel aus einem elastischen Kunststoff, wie z. B. einem Elastomer, beispielsweise Gummi oder Kautschuk, oder geeignet geformten Metallblechen oder -stegen, beispielsweise aus Stahl und beispielsweise in Form einer Blattfeder, ausgebildet sein. Durch Andrücken der Y-Schenkel der Klammer der Haltevorrichtung an den zu transportierenden Behälter ändert sich somit je nach Andruckskraft der Winkel zwischen den Y-Schenkeln, sodass verschiedene Behälter mit einem Querschnittsdurchmesser in einem durch die Länge der Y-Schenkel vorgegebenen Bereich form- und evtl. kraftschlüssig gehalten werden können.

Um ein sicheres Halten der zu transportierenden Behälter zu gewährleisten, können die Klammern zudem aus einem Material mit hohem Haftreibungskoeffizient bestehen oder mit einem solchen auf der Kontaktseite der Klammern beschichtet sein. Beispielsweise können auch hier elastomere Beschichtungen zum Einsatz kommen, die sich der Form des Behälters innerhalb gewisser Grenzen anpassen können. Die Materialien können dabei in Abhängigkeit von der Form und dem Gewicht der zu transportierenden Behälter ausgewählt werden.

Gemäß einer alternativen Weiterbildung können die Haltevorrichtungen mit einem rechten Winkel zwischen den Y-Schenkeln der Klammern, d. h. mit rechtwinkligen Winkelelementen, ausgebildet sein. Ein rechtwinkliges Winkelelement erlaubt ebenso wie ein winkelverstellbares Winkelelement den Transport von, insbesondere kreiszylindrischen, Behältern unterschiedlicher Querschnittsgrößen. Bevorzugt weisen die Schenkel des Winkelelements dabei eine Länge auf, die dem Radius des maximal zu transportierenden Behälters entspricht. Einem eventuellen Überlapp solcher Schenkel gegenüberliegender Klammern beim Transport kleinerer Behälter kann durch das oben erwähnte kammartige Ausbilden oder einen vertikalen Versatz der jeweiligen Klammern vorgebeugt werden.

Zusätzlich können die Haltevorrichtungen wie oben erwähnt längenverfahrbar an den Fördermitteln angeordnet sein. Eine Längenverstellung, insbesondere des "langen" Y-Schenkels der Klammern der Haltevorrichtungen, kann mittels geeigneter an den Fördermitteln angeordneter Antriebseinrichtungen, wie beispielsweise Servomotoren, hydraulischen oder pneumatischen Hubzylindern, Linearmotoren oder dergleichen oder aber durch federelastische Lagerung des "langen" Y-Schenkels, realisiert werden, wobei letztere beim Bilden der Paare zusammengedrückt wird und somit eine Rückstellkraft auf den eingespannten Behälter ausübt. Bevorzugt werden dabei die federelastischen Lagerungen gegenüberliegender Haltevorrichtungen mit der gleichen Elastizität bzw. Federkonstanten vorgesehen. Durch Einsatz von längenverfahrbaren Haltevorrichtungen kann der Bereich der transportierbaren Behälterquerschnitte weiter erweitert werten. Die längenverfahrbare Haltevorrichtung bietet zusätzlich die Möglichkeit einer Überwachung der Einfahrtiefe der Halteelemente. Befindet sich die Einfahrtiefe nicht in der zu erwartenden Toleranz, kann davon ausgegangen werden, dass ein Behälter gebrochen ist oder eine im Durchmesser zu kleine Flasche in die Maschine eingefahren ist. In beiden Fällen kann sofort ein Notstopp ausgelöst werden, der die Maschine in bevorzugt weniger als 1 sec zum Stillstand bringt.

Gemäß einer weiteren Weiterbildung können die Haltevorrichtungen verschwenkbar ausgebildet sein. Dabei bezieht sich die Verschwenkbarkeit auf eine Achse parallel zur Längsachse der zu transportierenden zylindrischen Behälter. Beispielsweise können die Winkelelemente der Klammern verschwenkbar an den "langen" Y-Schenkeln der Klammern gelagert sein, wobei ein, insbesondere federelastisches, Rückstellelement vorgesehen sein kann, welches die Klammern im Leerzustand in eine Ausgangsposition zur Aufnahme eines Behälters zurückstellt. Die Ausgangsposition kann dabei beispielsweise eine Stellung sein, in der einer der Schenkel des Winkelelements mit dem "langen" Y-Schenkel eine gerade Linie bildet. Die Klammern können weiterhin über eine oder mehrere Arretierungsvorrichtungen verfügen, die die Verschwenkbarkeit der Winkelelemente auf einen vorgegebenen Winkelbereich begrenzen. Durch relatives Verfahren der ein Paar bildenden Fördermittel, wie es unten genauer beschrieben wird, lässt sich über das Verschwenken der Haltevorrichtung eine Drehung der transportierten Behälter bewirken, welche einen noch zu inspizierenden Seitenwandbereich der Behälter zur Inspektion durch eine auslaufseitig angeordnete Seitenwandinspektionseinrichtung positioniert.

Die erste und die zweite Transportbahn können erfindungsgemäß zumindest im Bereich der Transportstrecke der Durchlaufstation einen Individualantrieb zum einzelnen und unabhängigen Bewegen der Fördermittel, sowie ein Führungselement, insbesondere eine Führungsschiene, umfassen. Unter einem Individualantrieb ist hierbei ein solcher Antrieb zu verstehen, der ein Bewegen der Fördermittel mit individuellen Weg-Zeit-Profilen, d. h. einzeln und unabhängig voneinander, ermöglicht. Zum Führen der Fördermittel entlang der jeweiligen Transportbahn weist die Transportbahn nach der vorliegenden Weiterbildung ein Führungselement, beispielsweise in Form einer Führungsschiene und/oder eines Führungskanals, auf. Dementsprechend können die Fördermittel einen komplementären Führungskanal, ein komplementäres Führungselement, z. B. ein Führungsstift, und/oder eine oder mehrere geeignet angeordnete Führungsrollen aufweisen, welche z. B. mittels eines Spurkranzes auf der Führungsschiene der Transportbahn laufen. Eine Vielzahl alternativer Ausführungsformen, z. B. mittels Gleitlager, ist hierbei vorstellbar. Durch das Bereitstellen einer Führungsschiene auf der Transportbahn kann ein reibungsarmes Leiten der Fördermittel entlang der Transportbahn ermöglicht werden. Darüber hinaus kann die Transportbahn über eine Lauffläche verfügen, auf welcher entsprechende Stützelemente, z. B. Stützrollen, abrollen bzw. gleiten können. Weiterhin kann die Transportbahn mindestens einen Sensor zur Bestimmung der Position der Förderelemente entlang der Transportbahn umfassen. Insbesondere kann durch regelmäßige und periodische Anordnung von Sensoren entlang zumindest eines Teilstücks der Transportbahn die Position eines Fördermittels auf diesem Teilstück der Transportbahn bestimmt werden. Der Sensor kann dabei als optischer Sensor, elektrischer Sensor, elektromagnetischer Sensor oder mechanischer Sensor ausgebildet sein.

Besonders kann die Wegverfolgung über eine Steuerungselektronik für die Fördermittel erfolgen. Dabei kann die entsprechende Steuer- und/oder Regeleinheit einerseits den Fördermitteln die Soll-Positionen vorgeben und andererseits auch die Ist-Positionen feststellen und weitergeben, wobei die Positionen der Fördermittel in einer Speichereinheit der Steuer- und/oder Regeleinheit gespeichert werden können. Dadurch kann auf eine zusätzliche Wegverfolgung über Distanzsensoren bzw. Triggerlichtschranken größtenteils verzichtet werden.

Gemäß der vorliegenden Erfindung sind die Transportbahn und die Fördermittel derart ausgestaltet, dass die Fördermittel einzeln entlang der Transportstrecke geleitet werden können. Dies bedeutet, dass die Fördermittel je mindestens ein Reaktionselement aufweisen, welches mittels elektromagnetischer Wechselwirkung mit entlang der Transportbahn angeordneten Wechselwirkungselementen eine Kraft erfährt, durch welche das Fördermittel beschleunigt und somit bewegt werden kann. Durch gezieltes Ansteuern des Reaktionselements eines bestimmten Fördermittels und/oder eines oder mehrerer Wechselwirkungselemente in einem begrenzten Bereich der Transportbahn kann diese Kraftausübung auf ein bestimmtes Fördermittel beschränkt werden, wodurch das Fördermittel einzeln und unabhängig von anderen Fördermitteln entlang der Transportbahn geleitet werden kann.

Gemäß einer Weiterbildung kann der Individualantrieb ein Linearmotorantrieb sein, wobei die Fördermittel als Schlitten, Läufer, Puck, Shuttle oder dergleichen ausgebildet sind, die durch magnetische Wechselwirkung mit dem Linearmotorantrieb einzeln und unabhängig voneinander bewegbar sind, und wobei die Transporteinrichtung weiterhin eine Steuer- und/oder Regeleinrichtung umfasst, die dazu ausgebildet ist, die Fördermittel von einer Aufnahmestelle für die Behälter an der Zufuhrfördereinrichtung zu einer Abgabestelle für die Behälter an der Abfuhrfördereinrichtung zu bewegen.

Transportsysteme mit Linearmotorantrieb sind im Stand der Technik wohl bekannt. Allen Transportsystemen mit Linearmotorantrieb ist gemein, dass spezielle dazu ausgebildete Transportelemente bzw. Fördermittel über magnetische Wechselwirkung mit dem oder den Langstatoren bzw. Linearmotorsträngen eines oder mehrerer Linearmotoren entlang einer oder mehrerer Führungsschienen bewegt werden.

Im Fall der Verwendung eines Linearmotorantriebs als Individualantrieb können die Fördermittel und zumindest der Teil der jeweiligen Transportbahn entlang der Transportstrecke derart ausgebildet sein, dass die Fördermittel im Bereich der Transportstrecke mittels einer magnetischen Kraft, vorzugsweise in Wechselwirkung mit der Transportbahn, bewegt werden können. Der entsprechende Teil der Transportbahn kann insbesondere mit einem magnetischen Linearantrieb, zum Beispiel in Form eines synchronen oder asynchronen Linearmotors, ausgestattet sein. Dazu wird der entsprechende Abschnitt der Transportbahn mit einer Vielzahl von elektrischen Wicklungen in Form von einzeln ansteuerbaren Elektromagneten ausgerüstet. Um eine magnetische Wechselwirkung zwischen dem Fördermittel und den einzeln ansteuerbaren Elektromagneten der Transportbahn zu erzeugen, kann das Fördermittel mit einem oder mehreren Permanentmagneten bzw. nicht schaltenden Elektromagneten oder Eisenkernen ausgestattet werden.

In einer Ausführung kann das Fördermittel als ein passives Fördermittel ausgeführt sein, welches durch Wechselwirkung mit den von den einzeln ansteuerbaren Elektromagneten der Transportbahn erzeugten elektromagnetischen Wechselfeldern bewegt wird. Der mindestens eine Permanentmagnet bzw. nicht schaltende Elektromagnet bzw. Eisenkern des Fördermittels bildet somit das oben erwähnte Reaktionselement, während die einzeln ansteuerbaren Elektromagnete der Transportbahn die oben erwähnten Wechselwirkungselemente bilden. Bevorzugt ist bei Verwendung von passiven Fördermitteln eine Lokalisierungseinheit an der Transportbahn angebracht, um die Lage wenigstens eines Fördermittels und bevorzugt aller Fördermittel zu ermitteln und an eine Steuerung der Elektromagnete der Transportbahn weiterzugeben. Die Lokalisierungseinheit kann insbesondere durch die oben beschriebenen Sensoren realisiert werden. Die Stromstärke durch die elektrischen Wicklungen der Transportbahn kann von der Steuerung in Abhängigkeit von einem Kraftbedarf des zu bewegenden Fördermittels automatisch angepasst werden. Durch individuelles Regeln der Stromstärke durch einzelne Wicklungen der Transportbahn kann das Fördermittel außerdem beschleunigt, abgebremst oder mit einer vorgegebenen konstanten Geschwindigkeit bewegt werden.

Bei einer alternativen Ausführungsform ist das Fördermittel als aktives Fördermittel mit elektrischen Wicklungen versehen, welche die für den Antrieb notwendigen magnetischen Wechselfelder aufbringen können. Entsprechend wird der Abschnitt der Transportbahn mit Permanentmagneten bzw. nicht schaltenden Elektromagneten versehen. Hierbei können sowohl die für den Antrieb nötige elektrische Energie als auch für die Steuerung nötige Signale via Induktionsübertragung auf die einzelnen Fördermittel übertragen werden. Die Steuerung kann sich demnach dezentral auf den einzelnen Fördermitteln befinden oder auch zentral in einer eigenen Steuereinheit untergebracht sein. Alternativ dazu kann die nötige elektrische Energie über eine entlang der Transportbahn angeordnete Leitung auf die Fördermittel übertragen werden. Des Weiteren ist eine Kombination einer Ausführung des Fördermittels als aktives Fördermittel mit einer Transportbahn mit einzeln ansteuerbaren Elektromagneten denkbar.

Zum Einsatz eines Linearmotorantriebs kann die jeweilige Transportbahn einen oder mehrere Linearmotorstränge aufweisen, die als Langstatoren von, insbesondere synchronen, Linearmotoren ausgebildet sind. In einer alternativen Ausführung können die Linearmotorstränge auch als asynchrone Linearmotoren ausgebildet sein, wobei der mindestens eine Permanentmagnet und/oder nicht schaltende Elektromagnet des Reaktionselements des Fördermittels und/oder ein elektrisch leitendes Element des Fördermittels, z. B. in Form einer metallischen Platte, an welcher der Permanentmagnet und/oder nicht schaltende Elektromagnet angebracht sind, als elektrische Leiter für die Induktion durch die asynchronen Linearmotoren fungieren.

Neben dem oben beschriebenen, als Magnettrasse ausgebildeten Teil der Transportbahn innerhalb der Durchlaufstation kann die Transportbahn außerhalb der Durchlaufstation weiterhin wenigstens eine Teilstrecke, beispielsweise die Rückführstrecke, umfassen, entlang derer das Fördermittel mit einer konstanten Geschwindigkeit bewegt werden kann. Die Teilstrecke kann hierzu eine Antriebsvorrichtung in Form eines Transportbandes, einer Transportkette oder Ähnliches umfassen. Durch Kombination einer Transportstrecke mit Magnetantrieb innerhalb der Durchlaufstation und einer Rückführstrecke mit einem mechanischen Antrieb können Installationskosten der gesamten Transporteinrichtung gesenkt werden.

In einer Weiterbildung kann das Fördermittel vollmagnetisch oder teilweise magnetisch und teilweise mechanisch oder vollmechanisch an der Transportbahn gelagert sein. Bei vollmagnetischer Lagerung ist der oben beschriebene Teil der Transportbahn als Magnetschwebebahn ausgebildet, wobei elektrische Wicklungen in der Transportbahn und/oder dem Fördermittel vorgesehen sind, welche eine magnetische Levitation des Fördermittels über der Transportbahn bewirken. Dadurch lässt sich die Reibung zwischen dem Fördermittel und der Transportbahn auf ein Minimum reduzieren. Bei teilweise magnetischer und teilweise mechanischer Lagerung kann das Fördermittel zusätzlich ein oder mehrere Stützelemente, zum Beispiel in Form von Stützrollen und/oder Führungsrollen aufweisen. Die zusätzlichen Stützelemente rollen oder gleiten dabei auf einer Lauffläche der Transportbahn. Bei vollmechanischer Lagerung kann das Fördermittel ausschließlich durch das beschriebene mindestens eine Stützelement gelagert sein. Ergänzend oder alternativ hierzu kann eine Lagerung auch pneumatisch erfolgen, wobei die Transportbahn in dem entsprechenden Teilstück als Luftschwebebahn ausgeführt ist. Bei pneumatischer Lagerung ergibt sich wie auch bei vollständig magnetischer Lagerung eine Minimierung der Reibung zwischen dem Fördermittel und der Transportbahn.

Die Transporteinrichtung kann weiterhin eine Steuer- und / oder Regeleinrichtung, insbesondere einen Prozessrechner, zum Steuern des mindestens einen Fördermittels umfassen. Die Steuer- und / oder Regeleinrichtung kann dabei durch eine zentrale Steuereinheit und/oder durch dezentral an den Fördermitteln angeordnete Steuereinheiten realisiert werden. Die eine oder mehreren Steuereinheiten können dabei derart ausgebildet sein, dass sie die elektrischen Wicklungen der Transportbahn und/oder der Fördermittel derart individuell steuern und/oder regeln, dass die Fördermittel jedes Paares von gegenüberliegend angreifenden Fördermitteln zum Transport des oder der Behälter gleichzeitig entlang der Transportstrecke bewegt werden. Dabei kann die Geschwindigkeit der Paare entsprechend einer vorgegebenen Teilung des Stroms von Paaren vorgegeben werden. Die Paare können zudem entlang der Transportstrecke der Durchlaufstation beschleunigt oder abgebremst werden, je nachdem welche Anforderungen von den im Bereich der Durchlaufstation angeordneten Inspektionseinrichtungen gestellt werden. Beispielsweise können die Behälter im Bereich einer bestimmten Inspektionseinrichtung langsamer transportiert werden oder dort länger verweilen, wenn z. B. bei sehr stark absorbierenden Glasflaschen höhere Belichtungszeiten nötig sind oder, weil in derselben Position zwei Aufnahmen mit unterschiedlicher Beleuchtung gemacht werden sollen. Mittels einer Sortenverwaltung kann die Steuer- und/oder Regeleinheit flexibel auf einen Produktwechsel reagieren, indem die Weg-Zeit-Profile der Paare von Fördermitteln anhand der in der Sortenverwaltung gespeicherten Parameter an den neuen Behältertyp angepasst werden.

Die individuelle Steuerung der Fördermittel entlang der Transportstrecke erlaubt darüber hinaus das gezielte Aufnehmen eines oder mehrerer Behälter von der Zufuhrfördereinrichtung, indem sich die Haltevorrichtungen der gegenüberliegend angreifenden Fördermittel über entsprechende Kurvenstrecken auf die Behälter zu bewegen. Position und Bewegung des aufzunehmenden Behälters können hierbei über einen Positionssensor an der Zufuhrfördereinrichtung, wie z. B. eine Triggerlichtschranke und einen Inkrementalgeber, ermittelt und an die Steuer- und / oder Regeleinrichtung des Individualantriebs weitergegeben werden. Bei mehreren, auch bei sich berührenden Behältern im Zulauf der Inspektionsvorrichtung wird ein Behälter nach dem anderen auf diese Weise von einem Paar von Fördermitteln erfasst, was auch bei Staudruck zuverlässig funktioniert. Somit stellt die erfindungsgemäße Vorrichtung gleichzeitig eine Behältersperr- und Dosiereinrichtung dar. Auf aufwändige Elemente zum Druckabbau im Zulauf kann somit verzichtet werden, wodurch Installations- und Wartungskosten eingespart werden können. Des Weiteren erlaubt die individuelle Steuerung der Fördermittel eine gezielte Abgabe der durch die Durchlaufstation transportierten Behälter an die Abfuhrfördereinrichtung, wobei die Transportgeschwindigkeit der Behälter am Ende der Transportstrecke bevorzugt an die kontinuierliche Fördergeschwindigkeit der Abfuhrfördereinrichtung angepasst werden kann. Hierdurch kann ein Kippen der Behälter beim Absetzen auf den Abförderer verhindert werden.

Gemäß einer weiteren Weiterbildung kann die Steuer- und / oder Regeleinrichtung weiterhin dazu ausgebildet sein, die Fördermittel der ersten Vielzahl von Fördermitteln zumindest entlang eines Teils der Durchlaufstation mit einer höheren Geschwindigkeit als die Fördermittel der zweiten Vielzahl von Fördermitteln zu bewegen. Dadurch ergibt sich eine relative Verschiebung der beiden an einem Behälter angreifenden Fördermittel, wodurch der mitgeführte Behälter, insbesondere bei verschwenkbar ausgebildeten Haltevorrichtungen der Fördermittel, um seine Längsachse gedreht wird. Insbesondere ist eine Drehung des mitgeführten Behälters bei entsprechender Ausbildung der Haltevorrichtungen um bis zu 90°, bevorzugt um etwa 90°, denkbar. Eine solche Drehung kann in Kombination mit den unten erwähnten einlauf- und auslaufseitig angeordneten Seitenwandinspektionseinrichtungen zu einer vollständigen Inspektion der Seitenwand des Behälters eingesetzt werden. Die Behälterdrehung kann insbesondere bei der Übernahme des Behälters von der Zufuhrfördereinrichtung und / oder bei der Übergabe des Behälters an die Abfuhrfördereinrichtung durch unterschiedlich schnelles Bewegen der jeweiligen beiden Fördermittel erfolgen.

Gemäß einer weiteren Weiterbildung kann die Inspektionsvorrichtung weiterhin eine bei der Zufuhrfördereinrichtung angeordnete erste Inspektionsstation umfassen, die dazu ausgebildet ist, die passierenden Behälter von der Seite zu inspizieren, und / oder eine bei der Abfuhrfördereinrichtung angeordnete zweite Inspektionsstation umfassen, die dazu ausgebildet ist, die passierenden Behälter von der Seite zu inspizieren. Die Inspektionsstationen können dabei insbesondere am Ende bzw. Anfang der Zufuhr- respektive Abfuhrfördereinrichtung angeordnet sein. Zwischen den beiden Inspektionsstationen zur Seitenwandinspektion können die Behälter wie oben beschrieben mittels des Individualantriebs gedreht werden, um eine lückenlose Rundumkontrolle der Behälter zu ermöglichen.

Gemäß einer speziellen Weiterbildung können die erste und / oder zweite Inspektionsstation ein optisches System mit einer Kamera aufweisen, das derart ausgebildet ist, dass die Seite des zu inspizierenden Behälters innerhalb eines vorgegebenen Winkelbereichs in Umfangsrichtung erfasst wird. Beispielsweise kann mit einer LED-Flächenleuchte die gesamte Behälterhöhe belichtet werden, wobei eine oder mehrere CCD-Kameras eine oder mehrere Ansichten der Seitenwand des Behälters aus verschiedenen Blickwinkeln aufnehmen. So können beispielsweise über eine Kamera und ein optisches System aus vier Spiegeln zwei Abbildungen der Seitenwand unter unterschiedlichen Blickwinkeln aufgenommen werden, wobei die Blickwinkel z. B. um 90° in Umfangsrichtung voneinander abweichen. Bei durchsichtigen Gegenständen inspiziert die Seitenwandinspektionsstation nicht nur die zwischen Behälterachse und Aufnahmerichtung befindliche Seitenwand, sondern auch die auf der anderen Seite der Behälterachse befindliche Seitenwand. Somit kann bei Erfassen je eines 90° Winkelbereichs auf der Vorder- und Rückseite des Behälters durch Drehung des Behälters um 90° in der Durchlaufstation eine Rundumerfassung der Seitenwand mit den ein- und auslaufseitig angeordneten Inspektionsstationen erfolgen.

Insbesondere kann der erfasste Winkelbereich der ersten Inspektionsstation kleiner als der Winkelbereich der zweiten Inspektionsstation sein. Der erfasste Winkelbereich der ersten Inspektionsstation kann z. B. zwischen 40° und 60° liegen, während der erfasste Winkelbereich der zweiten Inspektionsstation entsprechend größer als 90° ausgebildet ist. Dadurch können auch unter Staudruck zugeförderte Behälter in der Zufuhrfördereinrichtung bzgl. ihrer Seitenwand inspiziert werden. Die optischen Systeme der ersten und zweiten Inspektionsstation, insbesondere eventuelle optische Elemente bzw. Spiegelelemente, können automatisch verstellbar ausgebildet sein, um an die Dimensionen eines neuen Behälters beim Sortenwechsel angepasst zu werden.

Gemäß einer weiteren Weiterbildung kann die Inspektionsvorrichtung des Weiteren eine Bodeninspektionsstation im Bereich der Durchlaufstation umfassen, die dazu ausgebildet ist, die Böden der passierenden Behälter zu inspizieren. Eine solche Bodeninspektionsstation kann beispielsweise eine Kamera aufweisen, welche ein Bild des Behälterbodens aufnimmt, der durch eine LED-Blitzlampe gleichmäßig ausgeleuchtet wird. Zu diesem Zweck muss der Boden des Behälters im Bereich der Inspektionsstation frei zugänglich sein, indem der Behälter schwebend transportiert wird. Die von den Inspektionsstationen aufgenommen sensorischen oder optischen Daten können an eine Auswerteeinheit, beispielsweise eine Recheneinheit, der Inspektionsvorrichtung weitergeleitet werden, die die Daten automatisch auswertet, um Beschädigungen oder Verschmutzungen zu erkennen. Die Daten können dabei über Kabel oder kabellos übertragen werden.

Die oben genannten Aufgaben werden auch durch ein Verfahren zum fortlaufenden Inspizieren von Behältern, insbesondere von Flaschen, gelöst, welches die folgenden Schritte umfasst: aufeinanderfolgendes Zuführen von Behältern zu einer Durchlaufstation einer Inspektionsvorrichtung, Transportieren der zugeführten Behälter in der Durchlaufstation, Inspizieren der zugeführten Behälter in der Durchlaufstation und Abführen der inspizierten Behälter, wobei das Transportieren der zugeführten Behälter in der Durchlaufstation mittels einer Transporteinrichtung mit einem Individualantrieb und einer Vielzahl von mittels des Individualantriebs einzeln und unabhängig voneinander bewegbaren Fördermitteln erfolgt.

Dabei können dieselben Variationen und Weiterbildungen, die oben im Zusammenhang mit der erfindungsgemäßen Inspektionsvorrichtung beschrieben wurden, auch auf das Verfahren zum fortlaufenden Inspizieren angewendet werden. Insbesondere können die Behälter der Durchlaufstation mittels einer Zufuhrfördereinrichtung als Behälterstrom zugefördert werden, wobei die zugeförderten Behälter von der Transporteinrichtung einzeln oder als Gebinde aufgenommen und mittels des Individualantriebs und der Vielzahl von Fördermitteln unabhängig voneinander und einzeln steuerbar entlang einer Transportstrecke der Durchlaufstation transportiert werden. Anschließend können die Behälter an eine Abfuhrfördereinrichtung übergeben werden, mittels derer sie abgefördert werden. Das Inspizieren der zugeführten Behälter in der Durchlaufstation kann mit einer oder mehreren der oben beschriebenen Inspektionsstationen erfolgen.

Gemäß einer Weiterbildung können die zugeführten Behälter mittels gegenüberliegend angreifender Fördermittel in der Durchlaufstation transportiert werden, wobei der Individualantrieb ein Linearmotorantrieb ist, und wobei die Fördermittel als Schlitten ausgebildet sind, die durch magnetische Wechselwirkung mit dem Linearmotorantrieb gesteuert bewegbar sind. Auch hier können die oben beschriebenen Weiterbildungen angewendet werden. Insbesondere können eine erste Vielzahl von Fördermitteln derart entlang einer ersten Transportbahn der Transporteinrichtung und eine zweite Vielzahl von Fördermitteln derart entlang einer zweiten Transportbahn der Transporteinrichtung bewegt werden, dass sich zur Übernahme eines Behälters von der Zufuhrfördereinrichtung ein Paar von gegenüberliegend angreifenden Fördermittel bildet, welches zur Übergabe des Behälters an die Abfuhrfördereinrichtung wieder aufgelöst wird. Mittels einer Steuer- und / oder Regeleinrichtung können die Fördermittel der Paare jeweils gleichzeitig entlang der Transportstrecke bewegt werden, wobei durch unterschiedlich schnelles Bewegen der Fördermittel eine Drehung des Behälters bei der Übernahme bzw. Übergabe oder entlang eines Teils der Transportstrecke bewirkt werden kann. Entsprechend kann eine Rundumkontrolle der Seitenwand des Behälters über ein- und auslaufseitig angeordnete Seitenwandinspektionsstationen erfolgen.

Gemäß einer speziellen Weiterbildung können die Behälter der Transporteinrichtung der Durchlaufstation Stoß an Stoß, d. h. unter Druck, zugeführt werden. In diesem Fall steuert die Steuer- und / oder Regeleinrichtung die Bewegung der gegenüberliegend angreifenden Fördermittel derart, dass durch die gezielte Paarbildung eine Sperr- und Dosierfunktion bei der Übernahme der Behälter realisiert wird. Auf aufwändige Vorrichtungen zum Druckabbau im Einlauf kann daher verzichtet werden.

Die beschriebene Inspektionsvorrichtung benötigt weniger Einbauraum in einer Anlage zur Leergutinspektion, weil Behälter sowohl mit Staudruck als auch vereinzelt in die Vorrichtung gefahren werden können und dadurch die Einrichtung zum Druckabbau entfallen kann. Aufgrund des Individualantriebs werden die Behälter unabhängig vom Einlaufabstand auf einen definierten Abstand am Auslauf der Durchlaufstation gebracht. Dies ermöglicht auslaufseitig den Einsatz von Seitenwandinspektoren mit einem Blickwinkelbereich von mehr als 90° und / oder eine Ausleitung der inspizierten Behälter per Segmentausleitung. Da die Behälter während des Durchlaufs durch die Durchlaufstation form- bzw. kraftschlüssig gehalten werden, ist die Verkippung gering, sodass diesbezüglich empfindliche Inspektionseinheiten optimal arbeiten können. Die Antriebe samt Drehmomentübertragung der sonst üblichen Riemenstation werden durch den Linearmotorantrieb ersetzt, welcher flexibler auf einen Sortenwechsel reagieren kann. Zu Reinigungs- oder Servicezwecken können die Fördermittel einzeln oder sämtlich aus der Durchlaufstation in eine speziell dafür vorgesehene Wartungsstation gefahren werden.

Des Weiteren kann die Streckenführung anders als bei den bekannten Riemenantrieben in der Durchlaufstation von einer linearen Streckenführung abweichen, da die unabhängige Steuerung der Fördermittel auch eine Kurvenfahrt ohne Weiteres ermöglicht. Dadurch kann die Transportstrecke der Durchlaufstation als 90° bis 180° Kurve ausgebildet sein, um die Länge der Prozessstrecke zu reduzieren. Um Querbeeinflussungen mehrerer Inspektionsstationen im Bereich der Durchlaufstation zu verhindern, dürfen diese im Allgemeinen nicht gleichzeitig triggern und z. B. eine geblitzte Beleuchtung auslösen. Durch die Möglichkeit, die Behälter innerhalb der Durchlaufstation mittels des Individualantriebs auf einen definierten Abstand zu fahren, kann dies auf einfache Art ausgeschlossen werden. Die beschriebenen Vorrichtungen und Verfahren ermöglichen somit eine Vereinfachung des Anlagenbaus sowie eine Flexibilisierung der Inspektionsvorrichtung im Hinblick auf die zu inspizierenden Behältertypen. Dadurch können Rüstzeiten reduziert und komplexe Elemente eingespart werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen.
- Fig. 1: stellt schematisch eine beispielhafte Ausführungsform einer Inspektionsvorrichtung gemäß der vorliegenden Erfindung in Draufsicht dar.
- Fig. 2: stellt eine beispielhafte Ausführungsform eines Fördermittels und einer Transportbahn mit einem Linearmotorantrieb dar.
- Fig. 3: stellt schematisch die Drehung eines Behälters um 90° im Auslauf der Durchlaufstation gemäß der vorliegenden Erfindung dar.
- Fig. 4: stellt schematisch die Drehung eines Behälters um 90° im Einlauf der Durchlaufstation gemäß der vorliegenden Erfindung dar.
- Fig. 5: zeigt eine exemplarische Weiterbildung einer Haltevorrichtung für Behälter unterschiedlicher Durchmesser gemäß der vorliegenden Erfindung.
- Fig. 6: stellt schematisch das Ineinandergreifen gegenüberliegend angreifender Klammern von Haltevorrichtungen gemäß der vorliegenden Erfindung dar.
- Fig. 7: stellt eine Variation der Weiterbildung nach Fig. 1 mit endständigen Rollen an den Klammern der Haltevorrichtungen dar.
- Fig. 8: zeigt eine exemplarische Ausbildung einer längenverfahrbaren Haltevorrichtung mit endständigen Rollen.
- Fig. 9: stellt schematisch das Drehen eines Behälters mittels eines Ratschenmechanismus dar.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

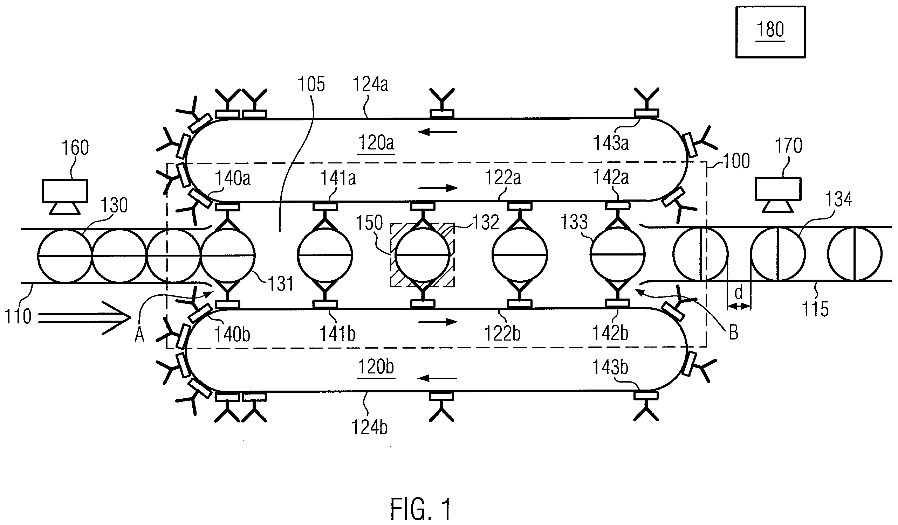

Figur 1 zeigt schematisch eine beispielhafte Ausführungsform einer Inspektionsvorrichtung gemäß der vorliegenden Erfindung in Draufsicht. Neben einer Zufuhrfördereinrichtung 110 zum aufeinanderfolgenden Zuführen von Behältern 130 und einer Abfuhrfördereinrichtung 115 zum Abführen der inspizierten Behälter 134 umfasst die dargestellte Inspektionsvorrichtung eine zwischen der Zufuhrfördereinrichtung und der Abfuhrfördereinrichtung angeordnete Durchlaufstation 100, die hier mittels einer gestrichelten Linie dargestellt ist. Erfindungsgemäß weist die Durchlaufstation 100 eine Transporteinrichtung mit einem Individualantrieb und einer Vielzahl von mittels des Individualantriebs einzeln und unabhängig voneinander bewegbaren Fördermitteln 140a bis 143a und 140b bis 143b auf, die die Behälter entlang einer Transportstrecke 105 der Durchlaufstation 100 von der Zufuhrfördereinrichtung zu der Abfuhrfördereinrichtung befördert. Die Transporteinrichtung umfasst hierzu eine erste Transportbahn 120a und eine zweite Transportbahn 120b, an denen jeweils eine Vielzahl von Fördermitteln 140a bis 143a bzw. 140b bis 143b angeordnet sind. Die hier dargestellten geschlossenen Transportbahnen 120a und 120b bestehen jeweils aus einem entlang der Transportstrecke 105 innerhalb der Durchlaufstation 100 angeordneten Teilstück 122a bzw. 122b und einer Rückführstrecke 124a bzw. 124b, entlang derer die unbeladenen Fördermittel zur Aufnahme eines neuen Behälters an der Aufnahmestelle A rückgeführt werden.

Die Transportbahnen sind dabei derart zueinander und zu der Zufuhrfördereinrichtung 110 bzw. der Abfuhrfördereinrichtung 115 angeordnet, dass im Bereich der Durchlaufstation Paare von gegenüberliegend angreifenden Fördermitteln für die Behälter jeweils aus einem Fördermittel der ersten Vielzahl von Fördermitteln und einem Fördermittel der zweiten Vielzahl von Fördermitteln gebildet werden können. Zu diesem Zweck weisen die Transportbahnen im Bereich der Aufnahmestelle A Kurvenstücke auf, wobei die entlang dieser Kurvenstücke bewegten Fördermittel 140a bzw. 140b so lange angenähert werden, bis ihre Y-förmigen Haltevorrichtungen einen Behälter 131 von dem Strom der Behälter 130 der Zufuhrfördereinrichtung 110 formschlüssig oder kraftschlüssig aufnehmen. Aufgrund der speziellen Form der Haltevorrichtungen kann dieses gezielte Aufnehmen eines einzelnen Behälters 131 auch bei Zufuhr der Behälter 130 unter Druck, d. h. Stoß an Stoß, zuverlässig erfolgen. Der zwischen den Haltevorrichtungen der gegenüberliegend angreifenden Fördermittel eingespannte Behälter 131 kann dabei von der Zufuhrfördereinrichtung 110 abgehoben werden, sodass während des Transports des Behälters entlang der Transportstrecke 105 sowohl die Bodenfläche als auch der Mündungsbereich des transportierten Behälters frei zugänglich ist.

In der hier dargestellten Weiterbildung sind die erste und zweite Transportbahn 122a bzw. 122b entlang der Transportstrecke 105 parallel zueinander angeordnet, sodass die transportierten Behälter 131 bis 133 während des gesamten Transports entlang der Transportstrecke durch die gebildeten Paare zuverlässig gehalten und transportiert werden. Exemplarisch ist an der hier gezeigten Transportstrecke 105 eine Bodeninspektionsstation 150 schematisch dargestellt, die beispielsweise mittels einer CCD-Kamera eine optische Aufnahme des von einer LED-Blitzleuchte ausgeleuchteten Bodens des Behälters 132 macht. Die Daten dieser Inspektionsstation können dabei zur weiteren Verarbeitung an die hier schematisch dargestellte Prozesseinheit 180 weitergegeben werden. Die Prozesseinheit 180 wertet die Daten automatisch aus, um beispielsweise Beschädigungen des Behälterbodens zu detektieren. Es versteht sich, dass weitere, hier nicht dargestellte Inspektionseinheiten im Bereich der Durchlaufstation 100 zur Inspektion der transportierten Behälter angeordnet sein können.

Am Ende der Transportstrecke 105 der Durchlaufstation 100 werden die Paare von Fördermitteln 142a bzw. 142b an einer Abgabestelle B beispielsweise durch divergierende Kurvenstücke der Transportbahn 120a und 120b wieder aufgehoben, sodass der mitgeführte Behälter 133 an die Abfuhrfördereinrichtung 115 übergeben wird. Da die Fördermittel entlang der Transportbahnen 122a und 122b erfindungsgemäß einzeln und unabhängig voneinander mittels eines Individualantriebs bewegt werden, können die in der Durchlaufstation 100 beförderten Behälter insbesondere gezielt mit einem gewünschten Abstand voneinander befördert werden. Hierdurch lässt sich auch nach Übergabe der inspizierten Behälter 133 an die Abfuhrfördereinrichtung 115 eine gewünschte Teilung d des auslaufenden Behälterstroms 134 einstellen. Besonders vorteilhaft kann diese Anordnung eingesetzt werden, da mit dieser Systematik auch Ausleitsysteme zum Einsatz kommen können, die dicht an dicht stehende Behälter nicht stehend ausleiten können. Auch für dicht an dicht stehende Behälter wird durch gezieltes Erzeugen eines Abstands die Ausleitquote positiv beeinflusst. Um hier eine Stausituation zu vermeiden, kann der Auslauftransporteur um den Betrag des Behälterabstands im Einlauf plus gewünschte Lücke schneller laufen.

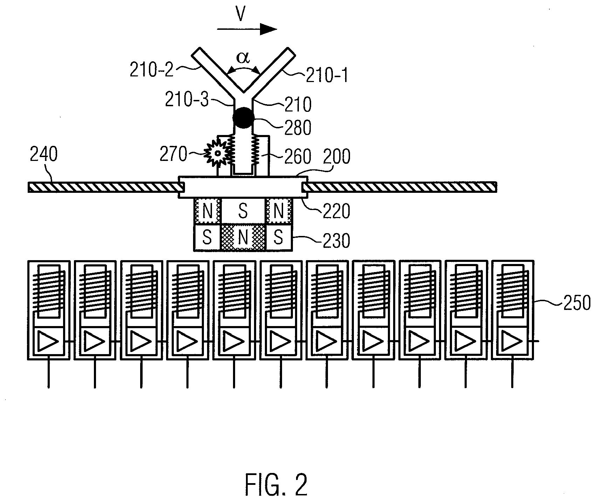

Die dargestellte Inspektionsvorrichtung erlaubt somit sowohl das Zufördern der Behälter 130 unter Druck als auch das Auseinanderfahren der transportierten Behälter auf eine gewünschte Auslaufteilung d. Die Bewegung der Fördermittel entlang der Transportstrecke 105 erfolgt dabei mit individuellem Weg-Zeit-Profil über eine Steuer- und/oder Regeleinrichtung der Transporteinrichtung, welche beispielsweise als Teil der Prozesseinheit 180 ausgebildet sein kann. In der hier dargestellten Weiterbildung verfügen die Transportbahnen 120a bzw. 120b entlang ihrer gesamten Länge über einen Individualantrieb, beispielsweise in Form des in Figur 2 gezeigten Linearmotorantriebs, sodass auch das Rückführen der Fördermittel entlang der Rückführstrecken 124a und 124b mit individuellem Weg-Zeit-Profil erfolgen kann. Insbesondere können die Fördermittel beschleunigt entlang der Rückführstrecken geführt werden, um die Gesamtzahl an benötigten Fördermitteln gering zu halten. Darüber hinaus können die Rückführstrecken 124a und 124b zum Puffern von Fördermitteln benutzt werden. Wie bereits beschrieben können zur Reduktion von Installations- und Betriebskosten jedoch auch Rückführstrecken mit einem kontinuierlichen Antrieb, beispielsweise in Form eines Riementransports bzw. einer Transportkette vorgesehen werden.

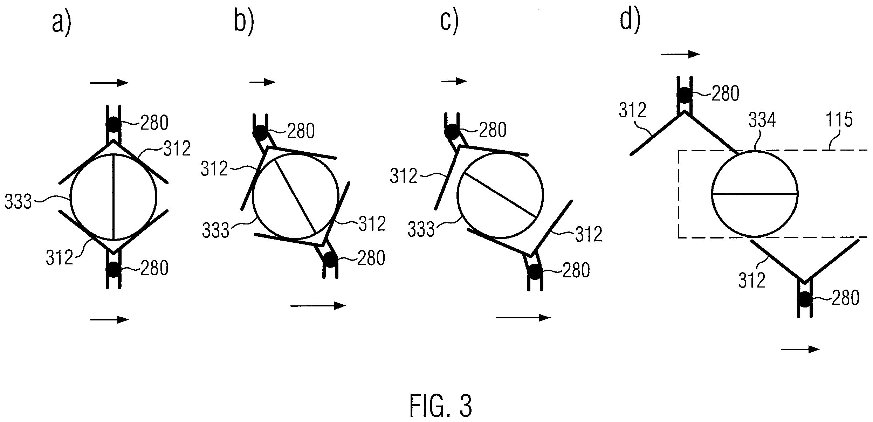

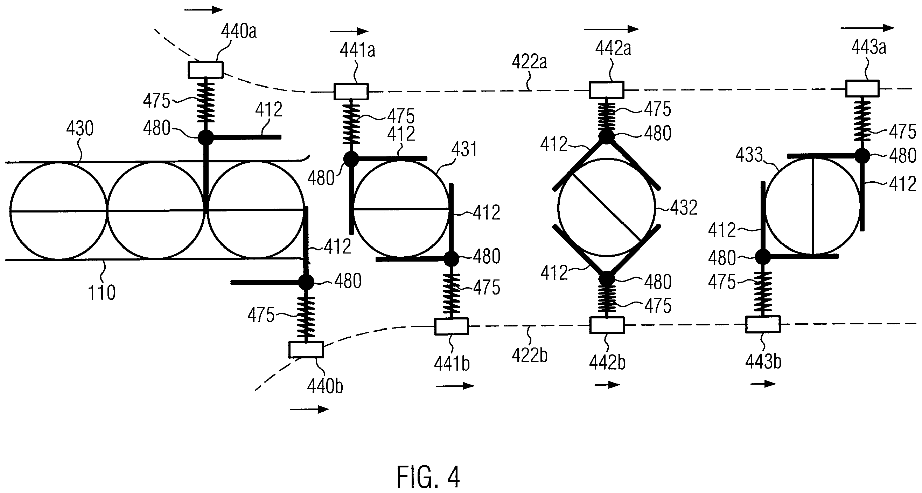

In der hier dargestellten Weiterbildung umfasst die Inspektionsvorrichtung weiterhin eine einlaufseitig an der Zufuhrfördereinrichtung 110 angeordnete erste Seitenwandinspektionsstation 160 zum Inspizieren eines ersten Winkelbereichs der Seitenwände einlaufender Behälter 130 und eine an der Abfuhrfördereinrichtung 115 angeordnete zweite Seitenwandinspektionsstation 170 zum Inspizieren eines zweiten Winkelbereichs der Seitenwände auslaufender Behälter 134. Wie in der Figur 1 durch den Teilungsstrich der Behälter angedeutet, können die Behälter während des Transports um beispielsweise 90° gedreht werden, sodass die erste und zweite Seitenwandinspektionsstation 160 bzw. 170 jeweils andere Teilbereiche der Seitenwand der Behälter inspiziert, um eine Rundumkontrolle der Behälterseitenwand zu ermöglichen. In der hier dargestellten schematischen Weiterbildung werden die Behälter 133 bei der Übergabe an die Abfuhrfördereinrichtung 115 um 90° gedreht. Da die einlaufenden Behälter 130 in dieser Weiterbildung Stoß an Stoß transportiert werden, ist der von der ersten Seitenwandinspektionsstation 160 erfasste Winkelbereich im Allgemeinen kleiner als 90°. Da der Behälterstrom 134 in der Abfuhrfördereinrichtung 115 jedoch auf eine Teilung d auseinandergefahren wird, kann mit der zweiten Seitenwandinspektionsstation 170 auch ein Winkelbereich größer als 90° erfasst werden, sodass sich in Kombination mit dem von der ersten Seitenwandinspektionsstation 160 erfassten Bereich eine vollständige Erfassung der Seitenwand der transportierten Behälter ergibt. Auch hier können die erfassten Sensor- bzw. Bilddaten der Seitenwandinspektionsstationen 160 und 170 zur automatischen Weiterverarbeitung an die Prozesseinheit 180 weitergeleitet werden. Die hier dargestellte Variante, bei der die transportierten Behälter bei der Übergabe an die Abfuhrfördereinrichtung 115 gedreht werden, stellt lediglich eine mögliche Variante dar. Alternativ können die Behälter bei Übernahme von der Zufuhrfördereinrichtung 110 gedreht werden oder sowohl bei der Übernahme als auch bei der Übergabe jeweils um einen kleineren Winkel gedreht werden. Zudem ist eine zumindest teilweise Drehung der Behälter um einen Winkel kleiner als 90° auch durch Bewegen der Fördermittel 141a und 141b eines jeden Paares mit unterschiedlichen Geschwindigkeiten möglich. Zwei spezielle Weiterbildungen zum Drehen der transportierten Behälter werden unten im Zusammenhang mit den Figuren 3 und 4 en detail erläutert.

Figur 2 stellt eine beispielhafte Ausführungsform eines Fördermittels und einer Transportbahn bei Verwendung eines Linearmotorantriebs zum individuellen Bewegen des Fördermittels dar. Die vorliegende Erfindung beschränkt sich jedoch nicht auf die hier dargestellte spezielle Ausführung des Fördermittels, sondern ist auf jede Art von individuell bewegbaren Fördermitteln anwendbar, solange gegenüberliegend angreifende Fördermittel die Behälter entlang der Transportstrecke form- oder kraftschlüssig bewegen können. Das hier dargestellte Fördermittel 200 kann entlang der Transportbahn mittels einer Führungsschiene 240 geleitet werden. Dabei ist das Förderelement in dieser speziellen Ausführung durch ein Gleitlager 220 an der Führungsschiene 240 gelagert. Die Figur zeigt weiterhin eine Haltevorrichtung 210, mittels derer das Fördermittel die Behälter erfassen und transportieren kann.

Die Haltevorrichtung 210 ist in der hier dargestellten exemplarischen Ausführung in Form eines zum Behälter hin offenen Ypsilons mit einem Öffnungswinkel α zwischen den beiden "kurzen" Y-Schenkeln 210-1 und 210-2 dargestellt. Der "lange" Schenkel 210-3 des Y ist dabei längenverfahrbar über eine Halterung 260 an dem Fördermittel 200 befestigt, wobei ein von einem Servomotor (nicht dargestellt) angetriebenes Zahnrad 270 in eine Zahnstange des "langen" Y-Schenkels 210-3 eingreift. Eine Vielzahl alternativer Ausführungen zum seitlichen Verfahren der Haltevorrichtung 210 ist dabei denkbar. Beispielsweise kann die Haltevorrichtung 210 mittels eines federelastischen Elements derart an dem Fördermittel 200 befestigt sein, dass die von den Y-Schenkeln 210-1 und 210-2 gebildete Klammer zum Aufnehmen des zu transportierenden Behälters durch Zusammendrücken dieses federelastischen Elements bezüglich des Gleitlagers 220 längenverfahrbar ist.

Die dem Behälter zugewandten Seiten der Y-Schenkel 210-1 und 210-2 der Klammer können mit einer Haftschicht beschichtet sein, um ein sicheres Halten des Behälters in schwebendem Transport zu gewährleisten. Alternativ können die gesamten Schenkel 210-1 und 210-2 aus diesem Material mit ausreichend hoher Haftreibung gebildet sein, wobei insbesondere eine Ausbildung der Y-Schenkel aus einem elastisch verformbaren Material möglich ist. In letzterem Fall kann der Winkel zwischen den beiden Y-Schenkeln durch Verformung des elastischen Materials derart veränderbar sein, dass von der Klammer eine Vielzahl von unterschiedlichen Behältertypen mit unterschiedlichen Querschnittsdurchmessern sicher aufgenommen werden können.

In der hier dargestellten speziellen Weiterbildung ist die Y-förmige Klammer 210 zudem verschwenkbar über ein Schwenklager 280 an dem Fördermittel 200 gelagert, wobei hier nicht dargestellte Rückstellelemente zum Rückstellen der nicht beladenen Klammer 210 in eine vorgegebene Anfangsposition vorgesehen sein können. Darüber hinaus kann ein Verschwenken der Klammer durch hier nicht dargestellte Arretierungsvorrichtungen auf einen gewünschten Winkelbereich begrenzt werden.

Der Antrieb des hier dargestellten passiven Fördermittels geschieht durch magnetische Wechselwirkung zwischen dem Reaktionselement 230 des Fördermittels und einer Vielzahl elektrischer Wicklungen 250 entlang der Transportbahn. Dabei können die elektrischen Wicklungen 250 mittels einer Steuer- und/oder Regeleinrichtung (nicht dargestellt) individuell angesteuert und als Elektromagnete einzeln umgepolt werden. Durch Wechselwirkung der Magnetfelder der Elektromagnete mit dem hier dargestellten Permanentmagneten des Fördermittels erfährt das Fördermittel eine Kraftwirkung, welche bei geeigneter Steuerung der Elektromagnete 250 zu einer Beschleunigung, Abbremsung oder konstanten Bewegung des Fördermittels entlang der Führungsschiene 240 führt. Das hier dargestellte Reaktionselement 230 des Fördermittels besteht aus drei alternierend und senkrecht zur Führungsschiene angeordneten Permanentmagneten, wobei die Breite des mittleren Permanentmagneten in etwa dem Abstand zweier benachbarter elektrischer Wicklungen der Transportbahn entspricht und die Breite der äußeren Permanentmagnete etwa jeweils der Hälfte des Abstands der benachbarten elektrischen Wicklungen entspricht. Bei alternierender Polung benachbarter Elektromagnete in der Transportbahn kann somit eine maximale Kraft auf das Reaktionselement entlang der Führungsschiene ausgeübt werden. Durch individuelles Ansteuern der Elektromagnete 250 kann das Förderelement 200 mit der von einer Steuer- und/oder Regeleinheit der Transporteinrichtung vorgegebenen Geschwindigkeit V entlang der Führungsschiene 240 bewegt werden. Insbesondere können eine Vielzahl von Fördermitteln derart gesteuert entlang der Führungsschienen bewegt werden, dass eine Anpassung der Behälterteilung entlang der Transportstrecke erfolgt (siehe oben).

Figur 3 stellt schematisch die Drehung eines Behälters um 90° im Auslauf der Durchlaufstation gemäß der vorliegenden Erfindung dar. In der Figur ist der transportierte Behälter 333 in vier verschiedenen Phasen a) bis d) dieser Drehung gezeigt. Es versteht sich, dass die gezeigte Weiterbildung lediglich illustrativer Natur ist und nicht den Umfang der vorliegenden Erfindung beschränkt. Von den Fördermitteln sind in der Figur lediglich die Klammern 312 dargestellt, welche über Schwenklager 280 an den Fördermitteln gelagert sind.

Aufgrund der Schwenklager 280 können die Klammern 312 durch unterschiedlich schnelles Bewegen der ein Paar bildenden Fördermittel verschwenkt werden, so wie es hier durch die unterschiedliche Länge der Bewegungspfeile angedeutet ist. Indem die beiden Fördermittel eines Paares mit unterschiedlichen Geschwindigkeiten entlang ihrer Transportbahnen bewegt werden, entfernen sich deren Klammern 312 zusehends voneinander, wodurch eine Drehung des mitgeführten Behälters 333, wie hier durch den Längsstrich dargestellt, bewirkt wird.

Zu Anfang dieser Entwicklung (siehe Teilfigur a)) bewegen sich die gegenüberliegenden Fördermittel des Paares mit gleicher Geschwindigkeit, sodass der eingespannte Behälter 330 symmetrisch zwischen den gegenüberliegenden Klammern 312 gehalten wird. Gegenüber der Situation in Teilfigur a) wurde in der Teilfigur b) das untere Fördermittel beschleunigt, sodass die zugehörige Klammer 312 der Klammer des oberen Fördermittels vorauseilt. Dadurch findet gleichzeitig ein Verschwenken der beiden Klammern 312 um das jeweilige Schwenklager 280 statt, wodurch der mitgeführte Behälter 333 teilweise gedreht wird. In Teilfigur c) haben sich die beiden Fördermittel bereits so weit voneinander entfernt, dass der mitgeführte Behälter 333 den Kontakt zu je einem Schenkel der Klammern 312 verloren hat. Aufgrund der Haftreibung zwischen dem Behälter 333 und dem weiteren Schenkel rollt der Behälter während der zunehmenden Verscherung der beiden Klammern derart auf den Schenkeln ab, dass die anfängliche Drehung des Behälters weiter fortgesetzt wird, bis eine Drehung um etwa 90° erreicht ist.

Die Teilfigur d) zeigt die Situation nach Abschluss der Drehung des Behälters 334, wobei dieser bereits auf die Abfuhrfördereinrichtung 115 abgesetzt wurde. Aufgrund der nicht dargestellten Rückstellelemente werden die Klammern 312 nach Absetzen des Behälters 334 in ihre ursprüngliche Position zurückgeschwenkt, sodass die Fördermittel zur Aufnahme eines weiteren Behälters vorbereitet sind. Der nunmehr gedrehte Behälter 334 kann in einer nachgeordneten Seitenwandinspektionsstation hinsichtlich des bisher nicht untersuchten Seitenwandbereichs inspiziert werden.

Figur 4 stellt schematisch eine alternative Weiterbildung dar, bei der ein Behälter im Einlauf der Durchlaufstation um 90° gedreht wird. In der hier dargestellten Weiterbildung werden die einlaufenden Behälter 430 unter Druck, d. h. Stoß an Stoß, mittels der Zufuhrfördereinrichtung 110 zugefördert. Auch in dieser Weiterbildung verfügen die Fördermittel 440a bis 443a bzw. 440b bis 443b jeweils über eine Klammer 412, welche mittels eines Schwenklagers 480 an dem jeweiligen Fördermittel gelagert ist. Zusätzlich sind die Haltevorrichtungen der hier dargestellten Fördermittel mittels eines federelastischen Elements 475 gelagert, sodass die Klammer 412 längenverfahrbar bezüglich der Lagerung des Fördermittels an der jeweiligen Transportbahn 422a bzw. 422b ist.

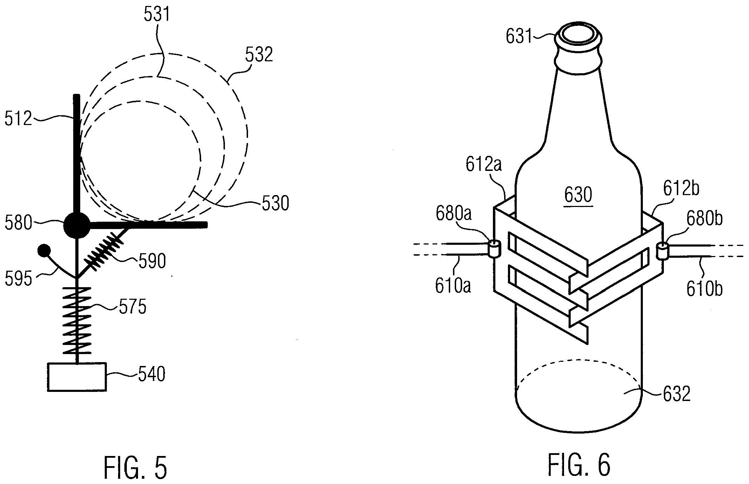

Anders als in der Figur 3 ist die Grundstellung der Klammern 412 der in der Figur 4 dargestellten Haltevorrichtungen, beispielsweise durch ein nicht dargestelltes Rückstellelement, derart vorgegeben, dass ein Y-Schenkel der Klammer in gerader Linie mit dem längenverfahrbaren Schenkel der Haltevorrichtung ausgerichtet ist. Dabei sind die Klammern 412 gegenüberliegender Fördermittel 440a und 440b erneut derart zueinander angeordnet, dass sich ihre Öffnungen gegenüberstehen. In der hier dargestellten Weiterbildung sind die Y-Schenkel der Klammern 412 exemplarisch mit einem rechten Winkel und starr ausgebildet, sodass wie in Figur 5 gezeigt eine Vielzahl von Behältern mit unterschiedlichen Behälterdurchmessern zuverlässig gehalten werden können. Der sich in linearer Verlängerung des "langen" Schenkels der Haltevorrichtung des Fördermittels 440a befindliche Y-Schenkel kann bei geeigneter Ausbildung des Y-Schenkels und Anordnung des Kurvenstücks der Transportbahn 422a zwischen dem aufzunehmenden Behälter und dem im Einlaufstrom nachfolgenden Behälter in den Strom eingeführt werden. Gleichzeitig wird das Fördermittel 440b entlang eines entsprechenden Kurvenstücks der Transportbahn 422b derart an die Zufuhrfördereinrichtung 110 herangefahren, dass der stromaufwärts von dem aufzunehmenden Behälter angeordnete Y-Schenkel 412 als Blockade gegen ein Herausrutschen des Behälters aus der Übernahmestelle dient. Somit kann gezielt ein einzelner Behälter von dem Behälterstrom 430 übernommen werden, wobei durch die Bildung des Paares von Fördermitteln 440a und 440b gleichzeitig eine Dosier- und Sperrfunktion erfüllt wird.

Die Fördermittel 441a und 441b werden so weit zusammengefahren, dass in dieser Weiterbildung beide Y-Schenkel der jeweiligen Klammer 412 in Kontakt mit dem zu haltenden Behälter 431 gebracht werden. Dabei können die federelastischen Elemente 475 zumindest teilweise zusammengedrückt werden, sodass die seitlich zur Transportrichtung anliegenden Y-Schenkel der Klammern 412 mit einer ausreichenden Kraft an die Behälterwand des Behälters 431 gedrückt werden. Die Ausdehnung der Y-Schenkel in Längsrichtung der Behälter kann dabei derart gewählt werden, das eine zum sicheren Halten des transportierten Behälters 431 ausreichende Haftreibung zwischen den Klammern 412 und der Behälteraußenfläche vorliegt. Auch bei Drehen des Behälters bei der Übernahme von der Zufuhrfördereinrichtung 110 geschieht diese Drehung durch Bewegen der das Paar bildenden Fördermittel 442a und 442b mit unterschiedlichen Geschwindigkeiten, so wie es in der Figur durch die unterschiedlich langen Pfeile angedeutet ist. In diesem Fall wird das Fördermittel 442a mittels der Steuer- und/oder Regeleinrichtung mit einer höheren Geschwindigkeit als das Fördermittel 442b bewegt, sodass der mitgeführte Behälter 432 im Uhrzeigersinn gedreht wird, so wie es durch den Längsstrich des Behälters angedeutet ist. Dabei werden die Klammern 412 derart um das Schwenklager 480 verschwenkt, dass stets beide Y-Schenkel der Klammern in Kontakt mit dem Behälter bleiben. Da dies jedoch zu einer Veränderung des Abstands des jeweiligen Schwenklagers 480 von dem Fördermittel 442a bzw. 442b führt, werden die federelastischen Elemente 475 durch diese Abstandsveränderungen eingedrückt.

Indem das Fördermittel 443a weiterhin mit einer höheren Geschwindigkeit als das Fördermittel 443b bewegt wird, setzt sich diese Drehung des Behälters 433 fort, bis eine Drehung um etwa 90° erreicht ist. In dieser Situation hat sich die Stellung der Klammern 412 gegenüber ihrer anfänglichen Stellung um 90° verändert, wobei weiterhin beide Y-Schenkel jeder Klammer in Kontakt mit der Behälteraußenfläche stehen. Zum weiteren Transport des Behälters 433 können die das Paar bildenden Fördermittel 443a und 443b anschließend mit gleicher Geschwindigkeit weiterbewegt werden. Nach Abgabe des mitgeführten Behälters an die Abfuhrfördereinrichtung können die jeweiligen Klammern 412 durch ein dementsprechend vorgesehenes Rückstellelement in ihre ursprüngliche Position zurückbewegt werden, um einen weiteren Behälter des Einlaufstroms 430 aufzunehmen. Eine Vielzahl alternativer Weiterbildung zum gezielten Aufnehmen und sicheren Transportieren eines Behälters, sowie zum Drehen des Behälters durch unterschiedlich schnelles Bewegen der Fördermittel des den Behälter haltenden Paares sind denkbar.

Figur 5 zeigt eine exemplarische Weiterbildung einer Haltevorrichtung für Behälter unterschiedlicher Durchmesser gemäß der vorliegenden Erfindung. Wie bereits in Figur 4 sind auch in dieser Weiterbildung die Y-Schenkel der Klammer 512 mit einem rechten Winkel vorgesehen und an ihrem Kreuzungspunkt über ein Schwenklager 580 an einem mittels eines federelastischen Elements 575 längenverfahrbaren Teil der Haltevorrichtung an dem hier schematisch dargestellten Lager 540 des Fördermittels gelagert. Repräsentativ sind in dieser Figur drei exemplarische Behälterquerschnitte 530 bis 532 gestrichelt dargestellt, wobei stets beide Y-Schenkel der Klammer 512 in Kontakt mit der Behälteraußenfläche stehen. Für Behälter 530, deren Durchmesser kleiner als die Länge der Y-Schenkel der Klammer 512 ist, können die gegenüberliegend angreifenden Klammern der jeweiligen Fördermittel entlang der Schwenkachse des Drehlagers 580, und damit entlang der Behälterlängsachse, versetzt angeordnet werden, wie es beispielsweise in Figur 6 dargestellt ist.

In der hier dargestellten Weiterbildung verfügt die Haltevorrichtung des Weiteren über ein federelastisches Rückstellelement 590, welches die Klammer 512 im unbelasteten Zustand in die hier dargestellte Ausgangsposition zurückführt. Zusätzlich kann eine Arretierungsvorrichtung 595, beispielsweise in Form eines Arretierungsbolzens vorgesehen sein, welche das Verschwenken der Klammer 512 auf einen gewünschten Winkelbereich begrenzt. Auf diese Weise kann ein Herausrutschen des mitgeführten Behälters aus den gegenüberliegend angreifenden Klammern des Paares von Fördermitteln verhindert werden.

Figur 6 stellt schematisch das Ineinandergreifen gegenüberliegend angreifender Klammern von Haltevorrichtungen gemäß einer speziellen Weiterbildung dar. In dieser exemplarischen Weiterbildung verfügen die Haltevorrichtungen der gegenüberliegend angreifenden Fördermittel über mehrere entlang der Schwenkachse versetzt angeordnete Klammern 612a und 612b, die in der hier dargestellten nicht limitierenden Weiterbildung kammartig ineinandergreifen. Beispielsweise kann die Haltevorrichtung der Fördermittel der ersten Vielzahl drei entlang der Behälterlängsachse versetzt angeordnete Klammern 612a aufweisen, die gemeinsam über ein Schwenklager 680a an dem "langen" Schenkel 610a der Haltevorrichtung gelagert sind. Dementsprechend kann die Haltevorrichtung des Fördermittels der zweiten Vielzahl von Fördermitteln über zwei entlang der Behälterlängsachse versetzt angeordnete Klammern 612b verfügen, die über ein entsprechendes Schwenklager 680b an dem "langen" Schenkel 610b der Haltevorrichtung gelagert sind. In der dargestellten Weiterbildung greifen die Klammern der beiden Haltevorrichtungen aufgrund ihrer im Vergleich zum Durchmesser des Behälters 630 großen Länge ineinander, ohne sich gegenseitig zu behindern. Das kammartige Ineinandergreifen der Klammern verhindert dabei zuverlässig ein Verkippen des Behälters während des Transports entlang der Durchlaufstation.

In der Figur 6 ist exemplarisch eine Flasche 630 gezeigt, welche zwischen den Klammern 612a und 612b gegenüberliegender Fördermittel schwebend gehalten wird, sodass gleichzeitig der Behälterboden 632 und der Mündungsbereich 631 der Flasche frei zugänglich sind. Dadurch kann die gesamte Flasche 630 entlang ihrer Längsrichtung mittels geeigneter Inspektionseinrichtungen untersucht werden, sodass sowohl der Bodenbereich 632 als auch der Mündungsbereich 631 auf Beschädigungen und Verschmutzungen inspiziert werden können.

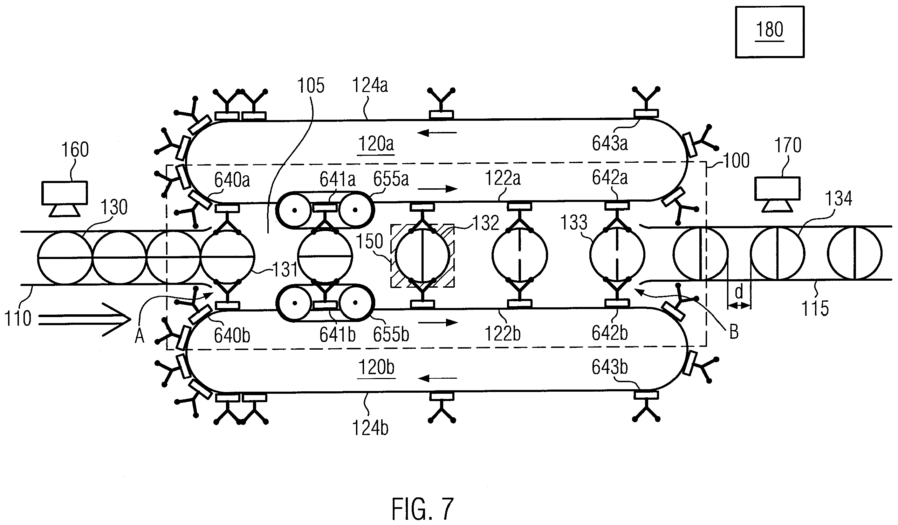

Figur 7 stellt eine Variation der Weiterbildung nach Figur 1 mit endständigen Rollen an den Klammern der Haltevorrichtungen dar. Die dargestellte Inspektionsvorrichtung entspricht dabei im Wesentlichen der Weiterbildung nach Figur 1 und wird daher nicht erneut beschrieben. Zusätzlich sind die Haltevorrichtungen der Fördermittel 640a bis 643a und 640b bis 643b in der Weiterbildung der Figur 7 mit endständigen Rollen an den Klammern ausgebildet, die die transportierten Behälter derart formschlüssig halten, dass sie zwar einerseits nicht herausrutschen können, andererseits jedoch um ihre Längsachse drehbar sind. Dabei können die Rollen insbesondere aus einem Material mit ausreichender Haftreibung bestehen bzw. mit einem solchen beschichtet sein, um ein Herausrutschen der transportierten Behälter zu vermeiden. Zum Drehen der zwischen den Rollen gegenüberliegender Haltevorrichtungen eingespannten Behälter sind in der hier dargestellten, nicht limitierenden Weiterbildung zwei Friktionsriemen 655a und 655b vorgesehen, die beidseitig der Transportstrecke 105 derart angeordnet sind, dass die Rollen der Fördermittel 641a und 641b in mechanischen Eingriff mit den Friktionsriemen gebracht werden können. Aufgrund der Bewegung des von den Fördermitteln gehaltenen Behälters relativ zu den Friktionsriemen und/oder einer gesteuert angetriebenen Rotation der Friktionsriemen können die Behälter indirekt über die Rollen der Haltevorrichtungen um einen gewünschten Winkel gedreht werden. Dabei kann die Steuer- und/oder Regeleinheit 180 die Friktionsriemen 655a und 655b derart antreiben, dass Behälter unterschiedlicher Durchmesser um den gewünschten Winkel gedreht werden. Es versteht sich, dass auch Weiterbildungen mit lediglich einem einseitig angreifenden Friktionsriemen 655a bzw. 655b möglich sind. Weiterhin können die Friktionsriemen 655a und 655b seitlich verfahrbar ausgebildet sein, um einen Sortenwechsel auf Behälter verschiedener Durchmesser zu ermöglichen.

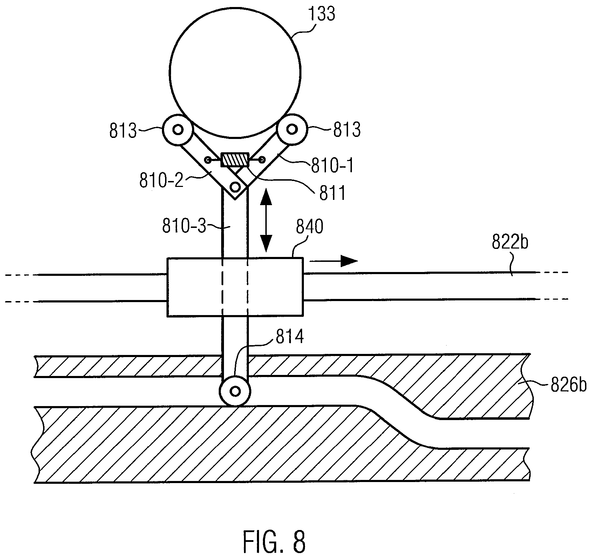

Figur 8 zeigt eine exemplarische Ausbildung einer längenverfahrbaren Haltevorrichtung mit endständigen Rollen. Gemäß dieser Ausbildung verfügt das Fördermittel 840 über einen relativ zur Lage der Fördermittels an der Transportbahn 822b verfahrbaren "langen" Schenkel 810-3, an dem die beiden "kurzen" Schenkel 810-1 und 810-2 der Y-förmigen Haltevorrichtung winkelverstellbar gelagert sind. Zusätzlich sind die beiden "kurzen" Schenkel mit einem federelastischen Element 811 derart miteinander verbunden, dass ein Auseinanderfahren der Schenkel nur gegen die Zugspannung dieses federelastischen Elements möglich ist. Weiterhin sind an den "kurzen" Schenkel 810-1 und 810-2 die oben erwähnten endständigen Rollen 813 angeordnet, die mit der Oberfläche des Behälters 133 in Kontakt gebracht werden können. Die gesamte Haltevorrichtung kann dabei beispielsweise über die dargestellte Steuerkurve 826b und die in ihr laufende Rolle 814 derart an den Behälter herangefahren werden, dass die Rollen gegen die gekrümmte Behälteroberfläche gedrückt und dadurch auseinander gedrückt werden. Bei entsprechender Ausbildung der Rollen, beispielsweise mit Gummierung, kann so ein sicheres Halten der transportierten Behälter garantiert werden. In der hier dargestellten Weiterbildung ist die Steuerkurve 826b derart ausgebildet, dass der Behälter 133 nach rechts hin, beispielsweise zum Abtransport durch eine Abfuhrfördereinrichtung, freigegeben wird.

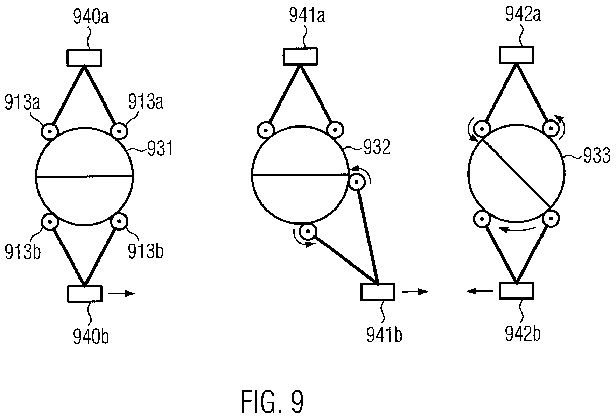

Figur 9stellt schematisch das Drehen eines Behälters mittels eines Ratschenmechanismus dar. In der Figur ist das Drehen des Behälters um einen vorgegeben (kleinen) Winkel in drei Phasen dargestellt. Grundvoraussetzung für den Einsatz des Ratschenmechanismus ist dabei, dass die endständigen Rollen 913a und/oder die endständigen Rollen 913b der Haltevorrichtungen der gegenüberliegend angreifenden Fördermittel 940a und 940b derart ausgebildet sind, dass sie in einer Drehrichtung sperren und in der anderen Drehrichtung frei drehen. In der hier dargestellten Weiterbildung erfolgt die Drehung des Behälters beim Zusammenfahren der Fördermittel, wobei wenigstens die Rollen 913b im Uhrzeigersinn sperren. Wird stattdessen das Fördermittel 940a als aktives Fördermittel zum Drehen des Behälters verwendet, so sperren mindestens die Rollen 913a im Gegenuhrzeigersinn. Entsprechend kann das Drehen des Behälters auch beim Auseinanderfahren der Fördermittel erfolgen. In diesem Fall sperren die Rollen 913a im Uhrzeigersinn bzw. die Rollen 913b im Gegenuhrzeigersinn, je nachdem ob das Fördermittel 940a oder das Fördermittel 940b aktiv zum Drehen des Behälters eingesetzt wird.

In der in Figur 9 dargestellten Variante wird das Fördermittel 940b aktiv zum Drehen des Behälters 931 verwendet. In der links dargestellten Ausgangsposition stehen sich die beiden Fördermittel 940a und 940b gegenüber. Indem das Fördermittel 941b nun schneller als das Fördermittel 941a bewegt wird, fahren die beiden Fördermittel auseinander, so wie es in der Mitte der Figur dargestellt ist. Die sich im Gegenuhrzeigersinn frei drehenden Rollen 913b rollen dabei auf der Oberfläche des Behälters 932 ab, der sich aufgrund der Sperrung der Rollen 913a im Uhrzeigersinn nicht mitdrehen kann. Erst beim Wiederzusammenfahren der Fördermittel 942a und 942b, wie es auf der rechten Seite der Figur dargestellt ist, führt die Reibung zwischen den nunmehr gesperrten Rollen 913b und der Oberfläche des Behälters 933 dazu, dass dieser mitgedreht wird. Dabei rollen in dieser Phase die im Gegenuhrzeigersinn frei drehenden Rollen 913a auf der Oberfläche des Behälters ab. Um einen größeren Drehwinkel zu erzielen, kann dieses Verfahren solange wiederholt werden, bis der Drehwinkel erreicht ist. Die in der Figur dargestellten Pfeile zeigen lediglich die Relativbewegung der Fördermittel, der selbstverständlich eine allgemeine Bewegung zum Transport des Behälters überlagert sein kann.

Um den Ratschenmechanismus realisieren zu können, werden die Haltevorrichtungen der Fördermittel zumindest in einem vorgegebenen Winkelbereich verschwenkbar und optional längenverfahrbar ausgebildet. Dadurch kann der Ratschenmechanismus auf eine Vielzahl unterschiedlicher Behälterdurchmesser angewendet werden. Das relative Verfahren der gegenüberliegend angreifenden Fördermittel kann dabei durch eine Steuer- und/oder Regeleinheit der Transporteinrichtung entsprechend dem Durchmesser der zu drehenden Behälter vorgenommen werden.

Die beschriebenen Inspektionsvorrichtungen erlauben ein sicheres und individuell steuerbares Führen von Behältern entlang der Transportstrecke der Durchlaufstation, sodass je nach Bedarf und je nach Behältertyp eine gewünschte Geschwindigkeit bzw. eine gewünschte Inspektionsdauer der Behälter vorgegeben werden kann. Dadurch können beispielsweise sehr stark absorbierende Glasflaschen, die eine höhere Belichtungszeit benötigen, länger an der jeweiligen Inspektionsstation verweilen. Zudem kann durch Verwendung des Individualantriebs ein gezieltes Aufnehmen einzelner Behälter aus einem auch unter Druck geförderten Einlaufstrom sowie ein gezieltes Vorgeben einer Behälterteilung bei Übergabe der Behälter an den Auslaufstrom realisiert werden, wodurch auf aufwändige Vorrichtungen zum Druckabbau im einlaufenden Behälterstrom verzichtet werden kann.

## Patentansprüche

1. Inspektionsvorrichtung zum fortlaufenden Inspizieren von zugeführten Behältern (130; 430), insbesondere von Flaschen (630), umfassend:
eine Zufuhrfördereinrichtung (110), die dazu ausgebildet ist, der Inspektionsvorrichtung aufeinanderfolgend Behälter (130; 430) zuzuführen,
wenigstens eine Inspektionseinrichtung (150, 160, 170), die dazu ausgebildet ist, die zugeführten Behälter (130; 430) zu inspizieren,
eine Abfuhrfördereinrichtung (115), die dazu ausgebildet ist, die inspizierten Behälter (134; 334) abzuführen, und
eine zwischen der Zufuhrfördereinrichtung (110) und der Abfuhrfördereinrichtung (115) angeordnete Durchlaufstation (100) für die Behälter (131-133; 333; 431-433; 931-933),
wobei wenigstens eine der wenigstens einen Inspektionseinrichtung (150, 160, 170) im Bereich der Durchlaufstation (100) angeordnet ist,
**dadurch gekennzeichnet, dass**
die Durchlaufstation (100) eine Transporteinrichtung mit einem Individualantrieb und einer Vielzahl von mittels des Individualantriebs einzeln und unabhängig voneinander bewegbaren Fördermitteln (140a-143a, 140b-143b; 200; 440a-443a, 440b-443b; 640a-643a, 640b-643b; 840; 940a-942a, 940b-942b) aufweist, die dazu ausgebildet ist, die Behälter (131-133; 333; 431-433; 931-933) von der Zufuhrfördereinrichtung (110) zu der Abfuhrfördereinrichtung (115) zu befördern;
wobei die Transporteinrichtung eine erste Transportbahn (120a) aufweist, an der eine erste Vielzahl von Fördermitteln (140a-143a; 440a-443a; 640a-643a; 840; 940a-942a) bewegbar angeordnet ist, und eine zweite Transportbahn (120b) aufweist, an der eine zweite Vielzahl von Fördermitteln (140b-143b; 440b-443b; 640b-643b; 840; 940b-942b) bewegbar angeordnet ist,
wobei die erste Transportbahn (120a) und die zweite Transportbahn (120b) derart zueinander und zu der Zufuhrfördereinrichtung (110) und der Abfuhrfördereinrichtung (115) angeordnet sind, dass im Bereich der Durchlaufstation (100) Paare von gegenüberliegend angreifenden Fördermitteln (141a, 142a, 141b, 142b; 441a-443a, 441b-443b; 641a, 642a, 641b, 642b; 940a-942a, 940b-942b) für die Behälter (131-133; 333; 431-433; 931-933) jeweils aus einem Fördermittel der ersten Vielzahl von Fördermitteln und einem Fördermittel der zweiten Vielzahl von Fördermitteln gebildet werden können; und
wobei die Fördermittel (200) seitlich angreifende Haltevorrichtungen aufweisen, und gegenüberliegend angreifende Fördermittel (141a, 142a, 141b, 142b; 441a-443a, 441b-443b; 641a, 642a, 641b, 642b; 940a-942a, 940b-942b) eines Paares im Bereich der Durchlaufstation (100) derart zueinander ausgerichtet sind, dass mindestens ein Behälter zwischen den Haltevorrichtungen gegenüberliegend angreifender Fördermittel (141a, 142a, 141b, 142b; 441a-443a, 441b-443b; 641a, 642a, 641b, 642b; 940a-942a, 940b-942b) derart form- oder kraftschlüssig gehalten und transportiert werden kann, dass sowohl ein Bodenbereich als auch ein Mündungsbereich des mindestens einen Behälters während des Transports frei zugänglich ist und somit von der wenigstens einen Inspektionseinrichtung (150, 160, 170) inspiziert werden kann.

2. Inspektionsvorrichtung nach Anspruch 1, wobei die Haltevorrichtungen eine oder mehrere Y-förmige Klammern (210) umfassen, die optional endständige Rollen (813; 913a, 913b) aufweisen.

3. Inspektionsvorrichtung nach Anspruch 2,
wobei ein rechter Winkel zwischen den Y-Schenkeln (210-1, 210-2; 312; 412; 512; 612a, 612b) der Klammern vorgesehen ist; und / oder
wobei die Haltevorrichtungen längenverfahrbar an den Fördermitteln (200; 440a-443a, 440b-443b; 540; 840) angeordnet sind.

4. Inspektionsvorrichtung nach einem der Ansprüche 1 bis 3, wobei die Haltevorrichtungen verschwenkbar ausgebildet sind.

5. Inspektionsvorrichtung nach einem der vorhergehenden Ansprüche,
wobei der Individualantrieb ein Linearmotorantrieb (250) ist,
wobei die Fördermittel (200) als Schlitten ausgebildet sind, die durch magnetische Wechselwirkung mit dem Linearmotorantrieb (250) einzeln und unabhängig voneinander bewegbar sind, und
wobei die Transporteinrichtung weiterhin eine Steuer- und / oder Regeleinrichtung (180) umfasst, die dazu ausgebildet ist, die Fördermittel (140a-143a, 140b-143b; 640a-643a, 640b-643b; 840; 940a-942a, 940b-942b) von einer Aufnahmestelle (A) für die Behälter (130) an der Zufuhrfördereinrichtung (110) zu einer Abgabestelle (B) für die Behälter (133) an der Abfuhrfördereinrichtung (115) zu bewegen.

6. Inspektionsvorrichtung nach Anspruch 5, wobei die Steuer- und / oder Regeleinrichtung (180) dazu ausgebildet ist, die Fördermittel der ersten Vielzahl von Fördermitteln (440a-443a; 940b) zumindest entlang eines Teils der Durchlaufstation (100) mit einer höheren Geschwindigkeit als die Fördermittel der zweiten Vielzahl von Fördermitteln (440b-443b; 940a) zu bewegen.

7. Inspektionsvorrichtung nach einem der vorhergehenden Ansprüche, weiterhin eine bei der Zufuhrfördereinrichtung (110) angeordnete erste Inspektionsstation (160) umfassend, die dazu ausgebildet ist, die passierenden Behälter (130) von der Seite zu inspizieren, und / oder eine bei der Abfuhrfördereinrichtung (115) angeordnete zweite Inspektionsstation (170) umfassend, die dazu ausgebildet ist, die passierenden Behälter (134) von der Seite zu inspizieren.

8. Inspektionsvorrichtung nach Anspruch 7, wobei die erste und / oder zweite Inspektionsstation (160, 170) ein optisches System mit einer Kamera aufweisen, das derart ausgebildet ist, dass die Seite des zu inspizierenden Behälters (130, 134) innerhalb eines vorgegebenen Winkelbereichs erfasst wird.

9. Inspektionsvorrichtung nach Anspruch 8, wobei der Winkelbereich der ersten Inspektionsstation (160) kleiner als der Winkelbereich der zweiten Inspektionsstation (170) ist.

10. Inspektionsvorrichtung nach einem der vorhergehenden Ansprüche, wobei die wenigstens eine Inspektionseinrichtung (150, 160, 170) in der Durchlaufstation (100) eine Bodeninspektionsstation (150) umfasst, die dazu ausgebildet ist, die Böden (632) der passierenden Behälter (132) zu inspizieren.

11. Verfahren zum fortlaufenden Inspizieren von Behältern (130; 430), insbesondere von Flaschen (630), umfassend die Schritte:
aufeinanderfolgendes Zuführen von Behältern (130; 430) zu einer Durchlaufstation (100) einer Inspektionsvorrichtung,
Transportieren der zugeführten Behälter (131-133; 333; 431-433; 931-933) in der Durchlaufstation (100),
Inspizieren der zugeführten Behälter (131-133; 333; 431-433; 931-933) in der Durchlaufstation (100), und
Abführen der inspizierten Behälter (134; 334),
**dadurch gekennzeichnet, dass**
das Transportieren der zugeführten Behälter (131-133; 333; 431-433; 931-933) in der Durchlaufstation (100) mittels einer Transporteinrichtung mit einem Individualantrieb und einer Vielzahl von mittels des Individualantriebs einzeln und unabhängig voneinander bewegbaren Fördermitteln (140a-143a, 140b-143b; 200; 440a-443a, 440b-443b; 640a-643a, 640b-643b; 840; 940a-942a, 940b-942b) erfolgt,
wobei die zugeführten Behälter (131-133; 333; 431-433) mittels gegenüberliegend angreifender Fördermittel (141a, 142a, 141b, 142b; 441a-443a, 441b-443b; 641a, 642a, 641b, 642b; 940a-942a, 940b-942b) in der Durchlaufstation (100) transportiert werden und dabei zwischen seitlich angreifenden Haltevorrichtungen der gegenüberliegend angreifenden Fördermittel derart form- oder kraftschlüssig gehalten werden, dass sowohl ein Bodenbereich als auch ein Mündungsbereich der transportierten Behälter während des Transports frei zugänglich ist und inspiziert werden kann.

12. Verfahren nach Anspruch 11,
wobei der Individualantrieb ein Linearmotorantrieb (250) ist, und
wobei die Fördermittel (200) als Schlitten ausgebildet sind, die durch magnetische Wechselwirkung mit dem Linearmotorantrieb (250) gesteuert bewegbar sind.

13. Verfahren nach Anspruch 11 oder 12, wobei die Behälter (130; 430) der Transporteinrichtung Stoß an Stoß zugeführt werden.

## Claims

1. An inspection device for continuously inspecting fed containers (130; 430), in particular bottles (630), comprising:
a feed conveying device (110) configured to feed containers (130; 430) to the inspection device in succession,
at least one inspection unit (150, 160, 170) configured to inspect the fed containers (130; 430),
a discharge conveying device (115) configured to discharge the inspected containers (134; 334), and
a throughput station (100) for the containers (131-133; 333; 431-433; 931-933), which is arranged between the feed conveying device (110) and the discharge conveying device (115),
wherein at least one of the at least one inspection unit (150, 160, 170) is arranged in the area of the throughput station (100),
**characterized in that**
the throughput station (100) comprises a conveyor arrangement with an individual drive and a plurality of conveying units (140a-143a, 140b-143b; 200; 440a-443a, 440b-443b; 640a-643a, 640b-643b; 840; 940a-942a, 940b-942b), which are movable by means of the individual drive individually and independently of one another, the conveyor arrangement being configured to convey the containers (131-133; 333; 431-433; 931-933) from the feed conveying device (110) to the discharge conveying device (115);
wherein the conveyor arrangement comprises a first conveyor track (120a) having movably arranged thereon a first plurality of conveying units (140a-143a; 440a-443a; 640a-643a; 840; 940a-942a), and a second conveyor track (120b) having movably arranged thereon a second plurality of conveying units (140b-143b; 440b-443b; 640b-643b; 840; 940b-942b),
wherein the first conveyor track (120a) and the second conveyor track (120b) are arranged relative to one another and relative to the feed conveying device (110) and the discharge conveying device (115) such that, in the area of the throughput station (100), pairs of oppositely engaging conveying units (141a, 142a, 141b, 142b; 441a-443a, 441b-443b; 641a, 642a, 641b, 642b; 940a-942a, 940b-942b) for the containers (131-133; 333; 431-433; 931-933) can be formed, said pairs consisting each of a conveying unit of the first plurality of conveying units and of a conveying unit of the second plurality of conveying units; and
wherein the conveying units (200) comprise laterally engaging holding devices, and wherein oppositely engaging conveying units (141a, 142a, 141b, 142b; 441a-443a, 441b-443b; 641a, 642a, 641b, 642b; 940a-942a, 940b-942b) of a pair are oriented relative to one another in the area of the throughput station (100) such that at least one container can be held and conveyed in a form-fit or in a force-fit manner between holding devices of oppositely engaging conveying units (141a, 142a, 141b, 142b; 441a-443a, 441b-443b; 641a, 642a, 641b, 642b; 940a-942a, 940b-942b) in such a way that both a bottom region and a mouth region of the at least one container are freely accessible during transport and can thus be inspected by the at least one inspection device (150, 160, 170).

2. The inspection device according to claim 1, wherein the holding devices comprise one or a plurality of Y-shaped clamps (210), which are optionally provided with end-mounted rollers (813; 913a, 913b).

3. The inspection device according to claim 2,
wherein a right angle is provided between the Y-legs (210-1, 210-2; 312; 412; 512; 612a, 612b) of the clamps; and/or
wherein the holding devices are arranged on the conveying units (200; 440a-443a, 440b-443b; 540; 840) in a linearly displaceable manner.

4. The inspection device according to one of the claims 1 to 3, wherein the holding devices are pivotable.

5. The inspection device according to one of the preceding claims,
wherein the individual drive is a linear motor drive (250),
wherein the conveying units (200) are configured as carriages, which are movable individually and independently of one another via magnetic interaction with the linear motor drive (250), and
wherein the conveyor arrangement additionally comprises an open-loop and/or closed-loop control unit (180), which is configured to move the conveying units (140a-143a, 140b-143b; 640a-643a, 640b-643b; 840; 940a-942a, 940b-942b) from a pick-up site (A) for the containers (130) at the feed conveying device (110) to a discharge site (B) for the containers (133) at the discharge conveying device (115).

6. The inspection device according to claim 5, wherein the open-loop and/or closed-loop control unit (180) is configured to move the conveying units of the first plurality of conveying units (440a-443a; 940b) at least along part of the throughput station (100) at a speed which is higher than that of the conveying units of the second plurality of conveying units (440b-443b; 940a).

7. The inspection device according to one of the preceding claims, further comprising a first inspection station (160) arranged near the feed conveying device (110) and configured to inspect the passing containers (130) from the side, and/or a second inspection station (170) arranged near the discharge conveying device (115) and configured to inspect the passing containers (134) from the side.

8. The inspection device according to claim 7, wherein the first and/or second inspection station(s) (160, 170) comprise(s) an optical system with a camera, said optical system being configured such that the side of the container to be inspected (130, 134) is detected within a predetermined angular area.

9. The inspection device according to claim 8, wherein the angular area of the first inspection station (160) is smaller than the angular area of the second inspection station (170).

10. The inspection device according to one of the preceding claims, wherein the at least one inspection device (150, 160, 170) in the throughput station (100) comprises a bottom inspection station (150), which is configured to inspect the bottoms (632) of the passing containers (132).

11. A method of continuously inspecting containers (130; 430), in particular bottles (630), comprising the following steps:
successive feeding of containers (130; 430) to a throughput station (100) of an inspection device,
conveying the fed containers (131-133; 333; 431-433; 931-933) in the throughput station (100),
inspecting the fed containers (131-133; 333; 431-433; 931-933) in the throughput station (100), and
discharging the inspected containers (134; 334),
**characterized in that**
the fed containers (131-133; 333; 431-433; 931-933) are conveyed in the throughput station (100) by means of a conveyor arrangement comprising an individual drive and a plurality of conveying units (140a-143a, 140b-143b; 200; 440a-443a, 440b-443b; 640a-643a, 640b-643b; 840; 940a-942a, 940b-942b) movable individually and independently of one another by means of the individual drive,
wherein the fed containers (131-133; 333; 431-433) are conveyed in the throughput station (100) by means of oppositely engaging conveying units (141a, 142a, 141b, 142b; 441a-443a, 441b-443b; 641a, 642a, 641b, 642b; 940a-942a, 940b-942b) and thereby are held in a form-fit or in a force-fit manner between laterally engaging holding devices of oppositely engaging conveying units in such a way that both a bottom region and a mouth region of the fed containers are freely accessible during transport and can be inspected.

12. The method according to claim 11,
wherein the individual drive is a linear motor drive (250), and
wherein the conveying units (200) are configured as carriages, which are movable in a controlled manner through magnetic interaction with the linear motor drive (250).

13. The method according to claim 11 or 12, wherein the containers (130; 430) are fed to the conveyor arrangement in a mutually abutting mode.

## Revendications

1. Dispositif d'inspection pour inspecter en continu des récipients amenés (130 ; 430), en particulier des bouteilles (630), comprenant :
un dispositif d'amenée (110) qui est conçu pour amener successivement les récipients au dispositif d'inspection (130 ; 430),
au moins un dispositif d'inspection (150, 160, 170) qui est conçu pour inspecter les récipients amenés (130 ; 430),
un dispositif d'évacuation (115) qui est conçu pour évacuer les récipients inspectés (134 ; 334) ; et
un poste de passage (100) des récipients (131-133 ; 333 ; 431-433 ; 931-933), agencé entre le dispositif d'amenée (110) et le dispositif d'évacuation (115),
dans lequel au moins un du au moins un dispositif d'inspection (150, 160, 170) est agencé dans la zone du poste de passage (100),
**caractérisé en ce que**
le poste de passage (100) présente un dispositif de transport muni d'un entraînement individuel et d'une pluralité de moyens d'acheminement (140a-143a, 140b-143b ; 200 ; 440a-443a, 440b-443b ; 640a-643a, 640b-643b ; 840 ; 940a-942a, 940b-942b) qui peuvent être déplacés individuellement et indépendamment les uns des autres au moyen de l'entraînement individuel, et qui est conçu pour transporter les récipients (131-133; 333; 431-433; 931-933) du dispositif d'amenée (110) au dispositif d'évacuation (115) ;
dans lequel le dispositif de transport comprend une première voie de transport (120a) sur laquelle est agencée de manière mobile une première pluralité de moyens d'acheminement (140a-143a; 440a-443a ; 640a-643a ; 840; 940a-942a) et une seconde voie de transport (120b) sur laquelle est agencée de manière mobile une seconde pluralité de moyens d'acheminement (140b-143b ; 440b-443b ; 640b-643b ; 840 ; 940b-942b),
dans lequel la première voie de transport (120a) et la seconde voie de transport (120b) sont agencées l'une par rapport à l'autre et par rapport au dispositif d'amenée (110) et au dispositif d'évacuation (115) de telle sorte que, dans la zone du poste de passage (100), des paires de moyens d'acheminement (141a, 142a, 141b, 142b ; 441a-443a, 441b-443b ; 641a, 642a, 641b, 642b ; 940a-942a, 940b-942b) venant en prise de manière opposée avec les récipients (131-133 ; 333 ; 431-433 ; 931-933) peuvent être formées respectivement à partir de premiers moyens d'acheminement de la première pluralité de moyens d'acheminement et de premiers moyens d'acheminement de la seconde pluralité de moyens d'acheminement ; et
dans lequel les moyens d'acheminement (200) comprennent des dispositif de retenue à mise en prise latérale et des moyens d'acheminement à mise en prise opposée (141a, 142a, 141b, 142b ; 441a-443a, 441b-443b ; 641a, 642a, 641b, 642b ; 940a-942a, 940b-942b) d'une paire dans la zone du poste de passage (100) sont alignés mutuellement de sorte qu'au moins un récipient peut être retenu et transporté entre les dispositifs de retenue des moyens d'acheminement à mise en prise opposée (141a, 142a, 141b, 142b ; 441a-443a, 441b-443b ; 641a, 642a, 641b, 642b ; 940a-942a, 940b-942b) par complémentarité de formes ou de forces de telle sorte qu'à la fois une zone de fond et une zone d'embouchure du au moins un récipient peut être librement accessible pendant le transport et peut donc être inspectée par au moins un dispositif d'inspection (150, 160, 170).

2. Dispositif d'inspection selon la revendication 1, dans lequel les dispositifs de retenue comprennent une ou plusieurs agrafes en forme de Y (210) présentant facultativement des rouleaux terminaux (813 ; 913a, 913b).

3. Dispositif d'inspection selon la revendication 2,
dans lequel un angle droit est prévu entre les branches en Y (210-1, 210-2 ; 312 ; 412 ; 512 ; 612a, 612b) des agrafes ; et/ou
dans lequel les dispositifs de retenue sont agencés pouvant être déplacés en longueur sur les moyens d'acheminement (200 ; 440a-443a, 440b-443b ; 540 ; 840).

4. Dispositif d'inspection selon l'une quelconque des revendications 1 à 3, dans lequel les dispositifs de retenue sont réalisés pouvant pivoter.

5. Dispositif d'inspection selon l'une quelconque des revendications précédentes, dans lequel l'entraînement individuel est un entraînement à moteur linéaire (250), dans lequel les moyens d'acheminement (200) sont conçus sous la forme de coulisseaux qui peuvent être déplacés individuellement et indépendamment les uns des autres par interaction magnétique avec l'entraînement à moteur linéaire (250), et dans lequel le dispositif de transport comprend en outre un dispositif de commande et/ou de régulation (180) qui est conçu pour déplacer les moyens d'acheminement (140a-143a, 140b-143b ; 640a-643a, 640b-643b ; 840 ; 940a-942a, 940b-942b) d'un point de réception (A) pour les récipients (130) sur le dispositif d'amenée (110) à un point de distribution (B) pour les récipients (133) sur le dispositif d'évacuation (115).

6. Dispositif d'inspection selon la revendication 5, dans lequel le dispositif de commande et/ou de régulation (180) est conçu pour déplacer les moyens d'acheminement de la première pluralité de moyens d'acheminement (440a à 443a ; 940b) au moins le long d'une partie du poste de passage (100) à une vitesse plus élevée que les moyens d'acheminement de la seconde pluralité de moyens d'acheminement (440b à 443b ; 940a).

7. Dispositif d'inspection selon l'une quelconque des revendications précédentes, comprenant en outre un premier poste d'inspection (160) agencé sur le dispositif d'amenée (110) et conçu pour inspecter les récipients de passage (130) à partir du côté, et/ou un second poste d'inspection (170) agencé sur le dispositif d'évacuation (115) et conçu pour inspecter les récipients de passage (134) à partir du côté.

8. Dispositif d'inspection selon la revendication 7, dans lequel le premier et/ou second poste d'inspection (160, 170) présente un système optique comprenant une caméra conçue pour détecter le côté du récipient à inspecter (130, 134) à l'intérieur d'une plage angulaire prédéterminée.

9. Dispositif d'inspection selon la revendication 8, dans lequel la plage angulaire du premier poste d'inspection (160) est inférieure à la plage angulaire du second poste d'inspection (170).

10. Dispositif d'inspection selon l'une quelconque des revendications précédentes, dans lequel le au moins un dispositif d'inspection (150, 160, 170) dans le poste de passage (100) comprend un poste d'inspection de fond (150) qui est conçu pour inspecter les fonds (632) des récipients de passage (132).

11. Procédé d'inspection en continu de récipients (130 ; 430), en particulier des bouteilles (630), comprenant les étapes consistant à :
amener successivement des récipients (130 ; 430) vers un poste de passage (100) d'un dispositif d'inspection,
transporter les récipients amenés (131-133 ; 333 ; 431-433 ; 931-933) jusque dans le poste de passage (100),
inspecter les récipients amenés (131-133 ; 333 ; 431-433 ; 931-933) dans le poste de passage (100), et
évacuer les récipients inspectés (134 ; 334),
**caractérisé en ce que**
le transport des récipients amenés (131-133 ; 333 ; 431-433 ; 931-933) jusque dans le poste de passage (100) survient au moyen d'un dispositif de transport avec un entraînement individuel et une pluralité de moyens d'acheminement (140a-143a, 140b-143b ; 200 ; 440a-443a, 440b-443b ; 640a-643a, 640b-643b ; 840 ; 940a-942a, 940b-942b) pouvant être déplacés individuellement et indépendamment les uns des autres au moyen de l'entraînement individuel,
dans lequel les récipients amenés (131-133 ; 333 ; 431-433) sont transportés jusque dans le poste de passage (100) au moyen de moyens d'acheminement à mise en prise opposée (141a, 142a, 141b, 142b ; 441a-443a, 441b-443b ; 641a, 642a, 641b, 642b ; 940a-942a, 940b-942b) et sont ainsi maintenus par complémentarité de formes ou de forces entre des dispositifs de retenue à mise en prise latérale des moyens d'acheminement à mise en prise opposée de telle sorte qu'une zone de fond et une zone d'embouchure des récipients transportés sont librement accessibles et peuvent être inspectées pendant le transport.

12. Procédé selon la revendication 11,
dans lequel l'entraînement individuel est un entraînement à moteur linéaire (250), et
dans lequel les moyens d'acheminement (200) sont conçus sous la forme de coulisseaux qui peuvent être déplacés de manière commandée par interaction magnétique avec l'entraînement à moteur linéaire (250).

13. Procédé selon la revendication 11 ou 12, dans lequel les récipients (130 ; 430) sont acheminés bout à bout vers le dispositif de transport.
